# EUROPEAN PATENT SPECIFICATION

(11) **EP 3 375 601 B1**
(45) Date of publication and mention of the grant of the patent: **01.01.2020**
(21) Application number: 16878198.7
(22) Date of filing: 14.11.2016
(51) Int. Cl.: B31F 1/36, B31F 1/28, B32B 38/18

(54) **SHEET HEATING APPARATUS, SINGLE FACER, AND APPARATUS FOR MANUFACTURING CORRUGATED CARDBOARD SHEET**
VORRICHTUNG ZUM ERHITZEN EINES BOGENS, EINSEITIGE WELLPAPPENMASCHINE UND VORRICHTUNG ZUR HERSTELLUNG EINES WELLPAPPEBOGENS
APPAREIL DE CHAUFFAGE DE FEUILLE, MACHINE POUR CARTON SIMPLE FACE ET APPAREIL DE FABRICATION DE FEUILLE DE CARTON ONDULÉ

(30) Priority: 24.12.2015 JP 2015252267
(43) Date of publication of application: 19.09.2018
(73) Proprietor: Mitsubishi Heavy Industries Machinery Systems, Ltd., Hyogo-ku, Kobe-shi Hyogo 652-8585 (JP)
(72) Inventor: NITTA, Takashi, Mihara-shi Hiroshima 729-0393 (JP); TANIMOTO, Koshi, Tokyo 108-8215 (JP); ISHIBUCHI, Hiroshi, Tokyo 108-8215 (JP)
(74) Representative: Hoffmann Eitle
(86) International application number: PCT/JP2016/083701
(87) International publication number: WO 2017/110302

(56) References cited:
- EP-A1- 0 566 842
- EP-A1- 0 574 872
- EP-A1- 0 574 872
- DE-A1- 19 506 777
- JP-A- H01 269 526
- JP-A- 2000 062 055
- JP-A- 2014 237 515
- JP-U- 3 147 387
- US-A- 2 219 065
- US-A- 5 783 006

## Description

### Technical Field

The present invention relates to a sheet heating apparatus that heats a sheet such as a corrugated fiberboard, a single facer that pastes a liner to corrugated core paper to manufacture a single-faced cardboard sheet, and an apparatus for manufacturing corrugated cardboard sheet that pastes the liner to both sides of the corrugated core paper to manufacture a double-faced cardboard sheet.

### Background Art

A corrugating machine, which is an apparatus for manufacturing corrugated cardboard sheet, includes a single facer that forms a single-faced cardboard sheet and a double facer that pastes bottom liner paper to the single-faced cardboard sheet to form a double-faced cardboard sheet. The single facer processes core paper (medium) into a wave shape and pastes a top liner to form a single-faced cardboard sheet, and the double facer pastes a bottom liner to the single-faced cardboard sheet to form a double-faced cardboard sheet. The continuous double-faced cardboard sheet manufactured by the double facer is cut by a slitter scorer so as to have a predetermined width, and is cut by a cutoff device so as to have a predetermined length, thereby becoming a corrugated fiberboard.

In the single facer of the corrugating machine, a top liner heated by a preheater is transferred to a nip portion between a pressurizing belt and an upper corrugating roll. After the core paper heated by the preheater is processed into a wavy shape on a meshing portion between the upper corrugating roll and a lower corrugating roll and glue is applied to a top portion of each flute, the core paper is transferred to the nip portion between the pressurizing belt and the upper corrugating roll. By doing so, the core paper is pasted to the top liner and a single-faced cardboard sheet is formed.

By transporting a top liner or core paper wound around an outer circumferential portion of a heating drum, which is in a cylindrical shape, the preheater of the related art heats the top liner or the core paper. For example, an apparatus is disclosed in the following PTL 1 as such a sheet heating apparatus. After a sheet is wound around a heating type drum and one surface of the sheet is heated, an apparatus for manufacturing corrugated cardboard sheet disclosed in PTL 1 heats the other surface, which has not been heated by the heating type drum, by a heating surface. EP 0574872 A1 relates to a sheet heating apparatus - which is applicable to a corrugated cardboard manufacturing apparatus - comprising two curved heating tables having convex surfaces facing away from each other and the surfaces being provided with openings, wherein the curved heating tables and side wall plates define an inner chamber which can be pressurized, such that an air flow from the pressurized inner chamber through the openings is generated thus forming an air cushion around the complete perimeter of the flat oval heating unit.

### Citation List

### Patent Literature

[PTL 1] PCT Japanese Translation Patent Publication No. 11-503374

### Summary of Invention

### Technical Problem

The heating type drum is provided and the heating surface curved near the heating type drum is provided in the sheet heating apparatus of the related art. However, the diameter of the heating type drum is large, thereby causing an increase in the size of the apparatus. In addition, since a sheet is heated by one heating surface of a curved heating member in a heating device with the curved heating surface, the temperature of the heating surface of the heating member decreases and the heating surface contracts while the temperature of the other surface that does not heat the sheet does not decrease and thus the other surface does not contract. Then, a heated surface of the sheet deforms in a recess direction and thus there is a possibility that the heating member cannot sufficiently heat the sheet.

The invention is devised in order to solve the problems described above, and an object thereof is to provide a sheet heating apparatus, a single facer, and an apparatus for manufacturing corrugated cardboard sheet, which suppress an increase in the size of the apparatus and suppress thermal deformation to efficiently heat a sheet.

### Solution to Problem

According to the invention for achieving the object described above, there is provided a sheet heating apparatus including a first heating plate that has a first heating surface curved in a convex shape, a second heating plate that has a second heating surface curved in a convex shape, a joining member that integrally joins the first heating plate and the second heating plate together such that the first heating surface and the second heating surface face outward, a heating section that heats the first heating plate and the second heating plate, and a guide member that guides a sheet such that the sheet comes into contact with the first heating surface and the second heating surface. Furthermore, the joining member is provided with a reinforcing member that joins intermediate portions of the first heating plate and the second heating plate in the sheet transporting direction together. Moreover, the length of the reinforcing member in the width direction of each of the heating plates is almost the same length as the width of each of the heating plates.

Accordingly, the first heating plate and the second heating plate are heated by the heating section. Thus, when the sheet travels while being guided by the guide member such that the sheet comes into contact with the first heating surface and the second heating surface, heat is transferred from the first heating surface and the second heating surface to the sheet and the temperature of the sheet rises. At this time, since the first heating plate and the second heating plate are joined together by the joining member and the first heating surface and the second heating surface are provided to face outward, the apparatus can be made thinner compared to the heating member of the related art, which is in a drum shape, and an increase in the size of the apparatus can be suppressed. In addition, since the first heating plate and the second heating plate are joined together by the joining member with the back surfaces thereof opposed to each other, even when heat is transferred from the first heating surface and the second heating surface to the sheet and the temperatures thereof decrease, the respective heating plates stretch to suppress thermal deformation and the sheet comes into close contact with the first heating surface and the second heating surface without a gap, such that heat is transferred. Thus, the sheet can be efficiently heated. In addition, the deformation of the first heating plate and the second heating plate can be suppressed by the reinforcing member, and the efficiency of heat transfer can be improved by the sheet travelling each of the heating surfaces without a gap.

In the sheet heating apparatus of the invention, an inverting guide that inverts a transporting direction of the sheet at end portions of the first heating plate and the second heating plate, which are joined together by the joining member, in a sheet transporting direction may be further included.

Accordingly, the transporting direction of the sheet is inverted by the inverting guide such that the sheet transitions from the first heating surface to the second heating surface, and thus the sheet can stably travel.

In the sheet heating apparatus of the invention, the joining member may have a first joining member that joins one end portion of the first heating plate and one end portion of the second heating plate in the sheet transporting direction together and a second joining member that joins the other end portion of the first heating plate and the other end portion of the second heating plate in the sheet transporting direction together, and the second joining member is provided with an inverting roller which is rotatably provided as the inverting guide.

Accordingly, each of end portions of the first heating plate and the second heating plate in the sheet transporting direction are joined together by the joining member. Even when the temperature of the first heating surface and the temperature of the second heating surface decrease, the deformation of each of the heating plates is suppressed and the sheet can travel while staying in close contact with the first heating surface and the second heating surface without a gap. In addition, by providing the inverting roller at the second joining member, the sheet can be smoothly inverted from the first heating surface to the second heating surface.

An inverting roller rotational resistance adjusting unit that adjusts a rotational resistance of the inverting roller is further included.

Accordingly, by the inverting roller rotational resistance adjusting unit adjusting the rotational resistance of the inverting roller, the tension of the sheet can be adjusted. Thus, a contact pressure between the sheet and the first heating surface or the second heating surface is adjusted and the heating temperature of the sheet can be adjusted.

In the sheet heating apparatus of the invention, the guide member may have a first guide roller disposed at the one end portion of the first heating plate and a second guide roller disposed at the one end portion of the second heating plate.

Accordingly, the sheet travels along the first heating surface by the first guide roller, and travels along the second heating surface by the second guide roller. Thus, the sheet can stably travel along each of the heating plates.

A first guide roller driving unit that moves the first guide roller close to or apart from the first heating surface and a second guide roller driving unit that moves the second guide roller close to or apart from the second heating surface are further included.

Accordingly, by each of the guide roller drive units adjusting the position of each of the guide rollers with respect to each of the heating surfaces, the contact lengths of the sheet with respect to the heating surfaces can be adjusted and the heating temperature of the sheet can be easily adjusted.

A first guide roller rotational resistance adjusting unit that adjusts a rotational resistance of the first guide roller is further included.

Accordingly, by the first guide roller rotational resistance adjusting unit adjusting the rotational resistance of the first guide roller, the tension of the sheet can be adjusted. Thus, a contact pressure between the sheet and the first heating surface and the second heating surface is adjusted and the heating temperature of the sheet can be adjusted.

In the sheet heating apparatus of the invention, a first pressing member that presses the sheet against the first heating surface on the one end portion of the first heating plate and a second pressing member that presses the sheet against the second heating surface on the other end portion of the second heating plate may be further included.

Accordingly, by the sheet being pressed against the first heating surface by the first pressing member on one end portion of the first heating plate and being pressed against the second heating surface by the second pressing member on the other end portion of the second heating plate, the infiltration of air between the sheet and each of the heating surfaces can be suppressed and the efficiency of heat transfer to the sheet can be improved.

In the sheet heating apparatus of the invention, a first pressing force adjusting unit that adjusts a pressing force exerted by the first pressing member and a second pressing force adjusting unit that adjusts a pressing force exerted by the second pressing member may be further included.

Accordingly, by each of the pressing force adjusting units adjusting the pressing force exerted by each of the pressing members, the adhesion of the sheet with respect to each of the heating surfaces can be adjusted, and the heating temperature of the sheet can be adjusted by adjusting the adhesion between the sheet and the first heating surface and the second heating surface.

In the sheet heating apparatus of the invention, a curvature at an upstream end side of each of the first heating surface and the second heating surface may be set to be higher than that at a downstream side in the sheet transporting direction.

Accordingly, when the sheet comes into contact with each of the heating surfaces, the contact angle of the sheet with respect to each of the heating surfaces becomes larger, wedging between the sheet and each of the heating surfaces reduces, and the infiltration of air between the sheet and each of the heating surfaces can be suppressed.

In the sheet heating apparatus of the invention, a plurality of groove portions along a direction intersecting the sheet transporting direction may be provided in surfaces of the first heating surface and the second heating surface.

Accordingly, when the sheet travels while staying in contact with each of the heating surfaces, air infiltrated between the sheet and each of the heating surfaces is discharged to the outside through the plurality of groove portions, the adhesion of the sheet with respect to each of the heating surfaces is enhanced, and thus the efficiency of heat transfer can be improved.

In the sheet heating apparatus of the invention, the guide member may include a first guide roller which is disposed at one end portion of the first heating plate so as to be opposed to the first heating surface and a second guide roller which is disposed at one end portion of the second heating plate so as to be opposed to the second heating surface. A first guide roller driving unit that moves the first guide roller close to or apart from the first heating surface, a second guide roller driving unit that moves the second guide roller close to or apart from the second heating surface, a first guide roller rotational resistance adjusting unit that adjusts a rotational resistance of the first guide roller, an inverting roller that inverts a transporting direction of the sheet at end portions of the first heating plate and the second heating plate, which are joined together by the joining member, in a sheet transporting direction, an inverting roller rotational resistance adjusting unit that adjusts a rotational resistance of the inverting roller, a first pressing member that presses the sheet against the first heating surface on the one end portion of the first heating pate, a second pressing member that presses the sheet against the second heating surface on the other end portion of the second heating plate, a first pressing force adjusting unit that adjusts a pressing force exerted by the first pressing member, a second pressing force adjusting unit that adjusts a pressing force exerted by the second pressing member, and a control device that adjusts the first and second guide roller drive units, the first guide roller rotational resistance adjusting unit, the inverting roller rotational resistance adjusting unit, and the first and second pressing force adjusting units in this order according to a heated state of the sheet caused by the first heating plate and the second heating plate may be further included.

Accordingly, by adjusting the positions of the guide rollers, the rotational resistance of the guide roller, the rotational resistance of the inverting roller, the pressing forces exerted by the pressing members, which have a great influence as factors heating the sheet, in this order according to the heated state of the sheet, the amount of heat transfer to the sheet can be adjusted with high accuracy.

In the sheet heating apparatus of the invention, a curvature of the first heating surface disposed on an upstream side in the sheet transporting direction may be set to be lower than a curvature of the second heating surface disposed on the downstream side in the sheet transporting direction.

Accordingly, when the sheet travels from the first heating surface to the second heating surface, a temperature difference between the sheet and the second heating surface is smaller than a temperature difference between the sheet and the first heating surface. Since the curvature of the first heating surface is lower than the curvature of the second heating surface, a contact pressure between the sheet and the second heating surface becomes higher and thus the sheet can be efficiently heated.

In the sheet heating apparatus of the invention, fins may be provided on back surfaces of the first heating plate and the second heating plate.

Accordingly, the sheet takes the heat of each of the heating surfaces of the heating plates away and the fins take the heat of each of the back surfaces of the heating plates away by providing the fins on each of the back surfaces of the heating plates. Therefore, a difference in a thermal elongation amount between each of the heating surfaces of the heating plates and each of the back surfaces of the heating plates reduces and thus the deformation of each of the heating plates can be suppressed.

The heating section may have an inlet header and an outlet header, which are arranged at one end portion of the first heating plate and one end portion of the second heating plate in a width direction intersecting the sheet transporting direction, an intermediate header that is arranged at the other end portion of the first heating plate and the other end portion of the second heating plate in the width direction, a plurality of upstream side heating medium flow passages that connect the inlet header and the intermediate header together, and a plurality of downstream side heating medium flow passages that connect the intermediate header and the outlet header together.

Accordingly, a heating medium supplied to the inlet header flows in the intermediate header through the plurality of upstream side heating medium flow passages, and flows in the outlet header through the plurality of downstream side heating medium flow passages. At this time, the temperature of the heating medium passing through each of the heating medium flow passages gradually decreases, and the heating medium passing through each of the upstream side heating medium flow passages and the heating medium passing through each of the downstream side heating medium flow passages have opposite flowing directions. Thus, in each of the heating plates, the amount of heat transfer to the sheet is uniformized in the width direction, and variations in the heating amount of the sheet can be suppressed.

The heating section may have a space portion defined by the first heating plate and the second heating plate, an inlet portion through which a heating medium is supplied to the space portion, and an outlet portion through which the heating medium is discharged from the space portion.

Accordingly, by supplying the heating medium to the space portion defined by the first heating plate and the second heating plate, the configuration of the heating section can be simplified and manufacturing costs can be lowered.

In the sheet heating apparatus of the invention, the heating section may have a plurality of upstream side heating medium flow passages provided in the second heating plate, which is disposed on the downstream side in the sheet transporting direction, in a width direction intersecting the sheet transporting direction, a plurality of downstream side heating medium flow passages provided in the first heating plate, which is disposed on the upstream side in the sheet transporting direction, in the width direction intersecting the sheet transporting direction, and an intermediate heating medium flow passage that connects downstream end portions of the plurality of upstream side heating medium flow passages and upstream end portions of the plurality of downstream side heating medium flow passages together.

Accordingly, when the sheet travels from the first heating surface to the second heating surface, a temperature difference between the sheet and the second heating surface is smaller than a temperature difference between the sheet and the first heating surface. The heating medium flows from each of the upstream side heating medium flow passages of the second heating plate, which is the downstream side, to each of the downstream side heating medium flow passages of the first heating plate, which is the upstream side. For this reason, although the temperature of the heating medium passing through each of the heating medium flow passages gradually decreases, a temperature difference between the sheet and the second heating surface is made larger and thus the sheet can be efficiently heated since the heating medium flows in the second heating plate, which is the downstream side, first.

According to the invention, there is provided a single facer including the sheet heating apparatus, which heats a second liner, and pasting the second liner heated by the sheet heating apparatus to corrugated core paper to manufacture a single-faced cardboard sheet.

Accordingly, since the sheet heating apparatus is configured such that the first heating plate and the second heating plate having the first heating surface and the second heating surface are joined together, an increase in the size of the apparatus can be suppressed and the sheet can be efficiently heated.

In the single facer of the invention, the sheet heating apparatus may be disposed above a mechanism that pastes the second liner to the corrugated core paper.

Accordingly, since an increase in the size of the sheet heating apparatus can be suppressed, the sheet heating apparatus can be disposed above the mechanism that pastes the second liner to the core paper, and thus the apparatus can be made compact.

According to the invention, there is provided an apparatus for manufacturing corrugated cardboard sheet including the single facer which pastes a second liner to corrugated core paper to manufacture a single-faced cardboard sheet and a double facer that pastes a first liner to the core paper side of the single-faced cardboard sheet to manufacture a double-faced cardboard sheet.

Accordingly, the single facer manufactures the single-faced cardboard sheet by pasting the second liner to the corrugated core paper, and the double facer manufactures the double-faced cardboard sheet by pasting the first liner to the core paper side of the single-faced cardboard sheet manufactured by the single facer. At this time, since the sheet heating apparatus that heats the second liner is configured such that the first heating plate and the second heating plate having the first heating surface and the second heating surface are joined together, an increase in the size of the apparatus can be suppressed and the sheet can be efficiently heated.

### Advantageous Effects of Invention

In the sheet heating apparatus, the single facer, and the apparatus for manufacturing corrugated cardboard sheet of the invention, an increase in the size of the apparatus can be suppressed and a sheet can be efficiently heated since the joining member that joins the first heating plate of which the first heating surface is curved in a convex shape and the second heating plate of which the second heating surface is curved in a convex shape together and the guide member that guides the sheet such that the sheet comes into contact with the first heating surface and the second heating surface are provided.

### Brief Description of Drawings

Fig. 1 is a schematic view illustrating a corrugating machine which is an apparatus for manufacturing corrugated cardboard sheet of a first embodiment.
Fig. 2 is a schematic configuration view illustrating a single facer including a sheet heating apparatus of the first embodiment.
Fig. 3 is a sectional view illustrating a steam flow passage in a first heating plate of a heating section.
Fig. 4 is a schematic configuration view illustrating a sheet heating apparatus of a second embodiment.
Fig. 5 is a schematic configuration view illustrating a sheet heating apparatus of a third embodiment.
Fig. 6 is a schematic configuration view illustrating a sheet heating apparatus of a fourth embodiment.
Fig. 7 is a schematic configuration view illustrating a sheet heating apparatus of a fifth embodiment.
Fig. 8 is a detailed view of main portions of a first heating plate.
Fig. 9 is a plan view illustrating a modification example of the first heating plate.
Fig. 10 is a schematic configuration diagram showing a sheet heating apparatus of a sixth embodiment.
Fig. 11 is a schematic configuration view illustrating a sheet heating apparatus of a seventh embodiment.
Fig. 12 is a schematic configuration view illustrating a sheet heating apparatus of an eighth embodiment.
Fig. 13 is a schematic configuration view illustrating a sheet heating apparatus of a ninth embodiment.
Fig. 14 is a schematic configuration view illustrating a sheet heating apparatus of a tenth embodiment.
Fig. 15 is a plan view illustrating the sheet heating apparatus.
Fig. 16 is a schematic configuration view illustrating a sheet heating apparatus of an example which does not form part of the present invention.
Fig. 17 is a plan view illustrating a modification example of the sheet heating apparatus.
Fig. 18 is a plan view illustrating the modification example of the sheet heating apparatus.
Fig. 19 is a schematic configuration view illustrating a sheet heating apparatus of an eleventh embodiment.

### Description of Embodiments

Hereinafter, suitable embodiments of a sheet heating apparatus, a single facer, and an apparatus for manufacturing corrugated cardboard sheet of the invention will be described in detail with reference to accompanying drawings. The invention is not limited to the embodiments. In a case where there are a plurality of embodiments, the invention may also include devices configured by combining the respective embodiments.

### [First embodiment]

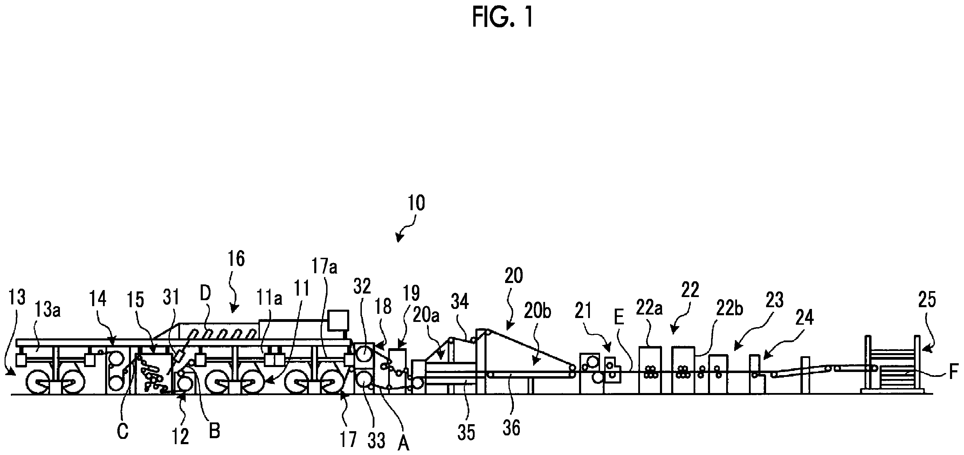

Fig. 1 is a schematic view illustrating a corrugating machine which is an apparatus for manufacturing corrugated cardboard sheet of a first embodiment.

In the first embodiment, a corrugating machine 10, which is the apparatus for manufacturing corrugated cardboard sheet, is an apparatus that manufactures a double-faced cardboard sheet by pasting, for example, a top liner C, which is a second liner, to a corrugated medium (core paper) B to manufacture a single-faced cardboard sheet D, pasting, for example, a bottom liner A, which is a first liner, to a medium B side of the manufactured single-faced cardboard sheet D to make a double-faced cardboard sheet E, and cutting a continuous double-faced cardboard sheet E into double-faced cardboard sheets F having a predetermined length, as illustrated in Fig. 1.

The corrugating machine 10 has a mill roll stand 11 of the medium B, a preheater (preheating device) 12, a mill roll stand 13 of the top liner C, a preheater (preheating device) 14, a single facer 15, a bridge 16, a mill roll stand 17 of the bottom liner A, a preheater (preheating device) 18, a glue machine 19, a double facer 20, a rotary shear 21, a slitter scorer 22, a cutoff 23, a defective sheet rejecting device 24, and a stacker 25.

A roll of paper that is core paper wound in a roll shape, on which the medium B is to be formed, is mounted on each of both sides of the mill roll stand 11, and above the mill roll stand, a splicer (paper splicing device) 11a that performs paper splicing is provided. In a case where paper is fed from one roll of paper, the other roll of paper is mounted and paper splicing is prepared. When a small amount of base paper from one roll of paper remains, base paper from the other roll of paper is spliced by the splicer 11a. While the base paper is being supplied from the other roll of paper, one roll of paper is mounted to prepare for paper splicing. In this manner, the base paper is spliced in turn and is continuously reeled out from the mill roll stand 11 to a downstream side.

A roll of paper that is the top liner C wound in a roll shape is mounted on each of both sides of the mill roll stand 13, and above the mill roll stand, a splicer 13a that performs paper splicing is provided. In a case where paper is fed from one roll of paper, the other roll of paper is mounted to prepare for paper splicing. When a small amount of base paper from one roll of paper remains, base paper from the other roll of paper is spliced by the splicer 13a. While the base paper is being supplied from the other roll of paper, one roll of paper is mounted to prepare for paper splicing. In this manner, the base paper is spliced in turn and is continuously reeled out from the mill roll stand 13 to a downstream side.

The preheaters 12 and 14 preheat the medium B and the top liner C respectively. The preheaters 12 and 14 each have a heating device into which steam is supplied. By transporting the base paper (medium B and top liner C) which is continuously reeled out from the mill roll stands 11 and 13 while the base paper is being heated by the heating device, the temperature of the medium B and the temperature of the top liner C rise to a predetermined temperature.

After the medium B heated by the preheater 12 is processed into a wavy shape, the single facer 15 applies glue to a top portion of each flute and pastes the top liner C heated by the preheater 14 to the medium, thereby forming the single-faced cardboard sheet D. A pickup conveyor 31 is provided obliquely above the single facer 15 on a downstream side of a transporting direction. The pickup conveyor 31 is configured with a pair of endless belts, and has a function of transporting the single-faced cardboard sheet D formed by the single facer 15 to the bridge 16 with the single-faced cardboard sheet being sandwiched therebetween. The bridge 16 functions as a stay unit that causes the single-faced cardboard sheet D to stay temporarily in order to absorb a speed difference between the single facer 15 and the double facer 20.

A roll of paper that is the bottom liner A wound in a roll shape is mounted on each of both sides of the mill roll stand 17, and above the mill roll stand, a splicer 17a that performs paper splicing is provided. In a case where paper is fed from one roll of paper, the other roll of paper is mounted to prepare for paper splicing. When a small amount of base paper from one roll of paper remains, base paper from the other roll of paper is spliced by the splicer 17a. While the base paper is being supplied from the other roll of paper, one roll of paper is mounted to prepare for paper splicing. In this manner, the base paper is spliced in turn and is continuously reeled out from the mill roll stand 17 to the downstream side.

The preheater 18 has a heating roll for the single-faced cardboard sheet D (hereinafter, single-faced corrugated board heating roll) 32 and a heating roll for the bottom liner A (hereinafter, bottom liner heating roll) 33. The single-faced corrugated board heating roll 32 has a winding amount adjusting device, is heated to a predetermined temperature as steam is supplied thereto, and can preheat the single-faced cardboard sheet D by winding a top liner C side of the single-faced cardboard sheet D around a circumferential surface thereof. Similarly, the bottom liner heating roll 33 also has a winding amount adjusting device, is heated to a predetermined temperature as steam is supplied thereto, and can preheat the bottom liner A by winding the bottom liner A around a circumferential surface thereof.

The glue machine 19 has an adhesive equipment and a pressurizing device. The single-faced cardboard sheet D heated by the single-faced corrugated board heating roll 32 is guided into the glue machine 19 on the way, and glue is applied to each of top portions of flutes of the medium B when passing between a rider roll and an adhesive applicator roll.

The single-faced cardboard sheet D to which glue is applied by the glue machine 19 is transferred to the double facer 20 for the next step. In addition, the bottom liner A heated by the bottom liner heating roll 33 also passes through the glue machine 19 and is transferred to the double facer 20.

The double facer 20 is divided into a heating section 20a on an upstream side and a cooling section 20b on the downstream side along a traveling line of the single-faced cardboard sheet D and the bottom liner A. The single-faced cardboard sheet D to which glue is applied by the glue machine 19 is brought in between a pressurizing belt 34 and a hot plate 35 through the heating section 20a, and the bottom liner A is brought in between the pressurizing belt 34 and the hot plate 35 so as to overlap the medium B side of the single-faced cardboard sheet D. After being brought in between the pressurizing belt 34 and the hot plate 35, the single-faced cardboard sheet D and the bottom liner A are integrated in a state of overlapping each other and are transferred to the cooling section 20b. By being heated while being pressurized during this transfer, the single-faced cardboard sheet D and the bottom liner A are pasted to each other and thus become the continuous double-faced cardboard sheet E. The double-faced cardboard sheet E is cooled naturally at the cooling section 20b when transported while being sandwiched between the pressurizing belt 34 and a transport belt 36.

The double-faced cardboard sheet E manufactured by the double facer 20 is transferred to the rotary shear 21. The rotary shear 21 cuts the double-faced cardboard sheet E in a width direction so as to have a full width or a partial width in a case where pasting is stabilized at an early stage of operation. The slitter scorer 22 severs the wide double-faced cardboard sheet E in the transporting direction so as to have a predetermined width, and processes creasing line extending in the transporting direction. The slitter scorer 22 is configured with a first slitter scorer unit 22a and a second slitter scorer unit 22b, which are arranged in the transporting direction of the double-faced cardboard sheet E and have substantially the same structure. The first slitter scorer unit 22a and the second slitter scorer unit 22b each have a plurality of sets of an upper creasing line roll and a lower creasing line roll, which are disposed so as to be opposed to each other with the double-faced cardboard sheet E being sandwiched therebetween, in the width direction, and each have a plurality of sets of slitter knives, which are disposed below the double-faced cardboard sheet E, in the width direction.

The cutoff 23 cuts the double-faced cardboard sheet E, which is severed by the slitter scorer 22 in the transporting direction, in the width direction, to form the plate-shaped double-faced cardboard sheet F having a predetermined length. The defective sheet rejecting device 24 outputs the double-faced cardboard sheet F determined as a defective sheet by a defect detection device to be described later from a transport line. The stacker 25 piles up the non-defective double-faced cardboard sheets F to output to the outside of the apparatus as a product.

Herein, a sheet heating apparatus of the first embodiment will be described. In the first embodiment, the sheet heating apparatus of the invention applied to the preheater 14 that is provided adjacent to the single facer 15 and preheats (heats) the top liner C will be described.

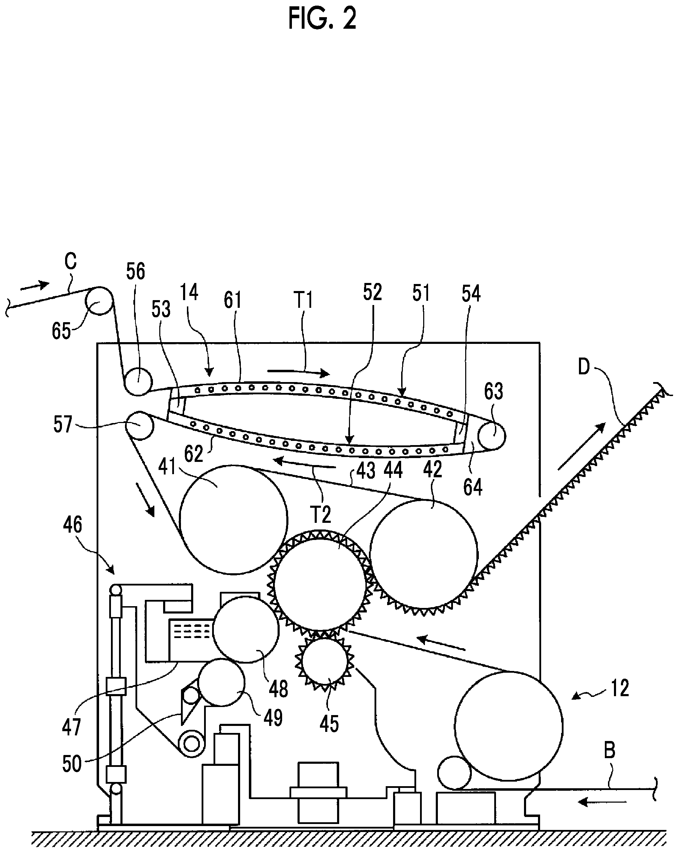

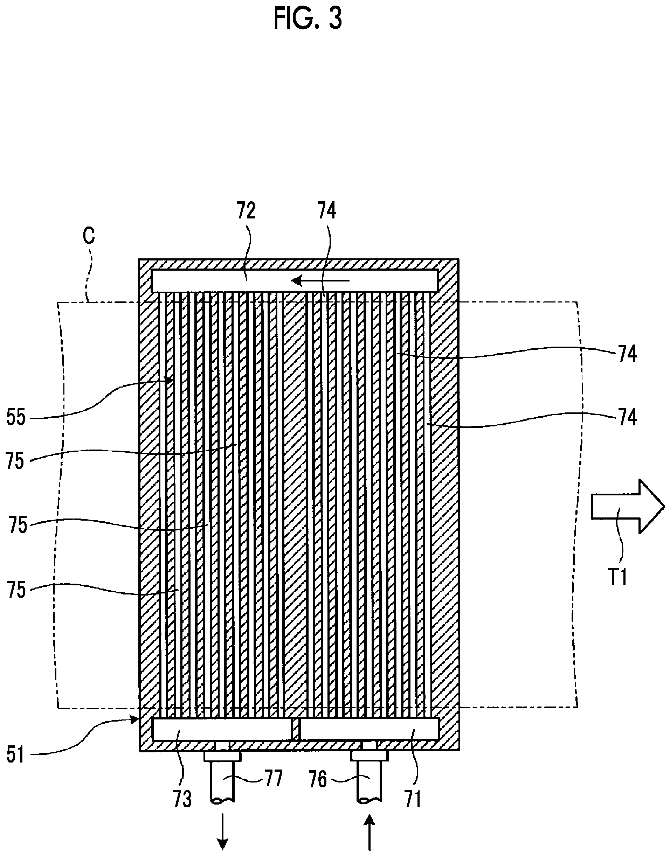

Fig. 2 is a schematic configuration view illustrating a single facer including the sheet heating apparatus of the first embodiment, and Fig. 3 is a sectional view illustrating steam flow passages in a first heating plate of a heating section.

As illustrated in Fig. 2, the single facer 15 has a belt roll 41, a tension roll 42, a pressurizing belt 43 wound around the belt roll 41 and the tension roll 42, an upper corrugating roll 44 that has a surface formed in a wavy shape and abuts against the pressurizing belt 43 in a pressurizing state, and a lower corrugating roll 45 that also has a surface formed in a wavy shape and meshes with the upper corrugating roll 44.

The top liner C heated by the preheater 14 is transferred to the pressurizing belt 43 guided by the belt roll 41 and to a nip portion between the pressurizing belt 43 and the upper corrugating roll 44. After being processed into a wavy shape on a meshing portion between the upper corrugating roll 44 and the lower corrugating roll 45, the medium B heated by the preheater 12 is guided by the upper corrugating roll 44 to be transferred to the nip portion between the pressurizing belt 43 and the upper corrugating roll 44.

An adhesive equipment 46 is disposed in the vicinity of the upper corrugating roll 44. The adhesive equipment 46 is configured with an adhesive dam 47 storing glue, an adhesive applicator roll 48 that applies glue to the medium B transported by the upper corrugating roll 44, a meter roll 49 that adjusts the amount of glue to be applied to an circumferential surface of the adhesive applicator roll 48, and a scraping blade 50 that scrapes off glue from the meter roll 49. The adhesive applicator roll 48 applies glue to the top portion of each flute of the medium B placed on the meshing portion between the upper corrugating roll 44 and the lower corrugating roll 45, and the medium is pasted to the top liner C on the nip portion between the pressurizing belt 43 and the upper corrugating roll 44, such that the single-faced cardboard sheet D is formed.

In the first embodiment, the preheater 14 heats the top liner (sheet) C supplied to the single facer 15, as illustrated in Fig. 2 and Fig. 3. The preheater 14 is disposed above the belt roll 41, the tension roll 42, and the pressurizing belt 43.

The preheater 14 includes a first heating plate 51, a second heating plate 52, a first joining member 53 and a second joining member 54 which are joining members, heating sections 55, and a first guide roller 56 and a second guide roller 57, which are guide members.

On a surface portion of the plate-shaped first heating plate 51 having an almost uniform thickness, a first heating surface 61 that is curved in a convex shape at a predetermined curvature is formed. The first heating plate 51 has a predetermined length and is set so as to have a width larger than the width of the top liner C. On a surface portion of the plate-shaped second heating plate 52 having an almost uniform thickness, a second heating surface 62 that is curved in a convex shape at a predetermined curvature is formed. The second heating plate 52 has a predetermined length and is set so as to have a width larger than the width of the top liner C. The first heating plate 51 and the second heating plate 52 are set so as to have the same dimensions including a size (length and width), a thickness, and a curvature.

The first heating plate 51 and the second heating plate 52 are disposed such that the first heating surface 61 and the second heating surface 62 face outward. The first heating plate 51 and the second heating plate 52 are integrally joined by the first joining member 53 and the second joining member 54. That is, the first heating plate 51 and the second heating plate 52 are disposed such that back surfaces thereof are opposed to each other, one end portion of the first heating plate and one end portion of the second heating plate in sheet transporting directions T1 and T2 are integrally joined together by the first joining member 53, and the other end portion of the first heating plate and the other end portion of the second heating plate in the sheet transporting directions T1 and T2 are integrally jointed together by the second joining member 54. The length of each of the joining members 53 and 54 in a width direction of each of the heating plates 51 and 52 is almost the same length as the width of each of the heating plates 51 and 52. The joining members 53 and 54 each may be configured with a plurality of members, and the respective heating plates 51 and 52 may be partially joined together in the width direction.

The first guide roller 56 and the second guide roller 57 guide the top liner C such that the top liner comes into contact with the first heating surface 61 and the second heating surface 62. The first guide roller 56 is disposed on one end portion of the first heating plate 51, and the second guide roller 57 is disposed on one end portion of the second heating plate 52. Specifically, the first guide roller 56 and the second guide roller 57 are disposed so as to be spaced apart from one end portion of the first heating plate 51 and one end portion of the second heating plate 52 respectively by only a predetermined distance, and are disposed such that outer circumferential surfaces thereof opposed to each other are positioned on extension lines of the first heating surface 61 and the second heating surface 62 respectively.

An inverting roller 63, which is an inverting guide inverting the sheet transporting direction T1 of the top liner C to the sheet transporting direction T2, is provided at the other end portion of the first heating plate 51 and the other end portion of the second heating plate 52 in the sheet transporting directions T1 and T2. That is, an attachment bracket 64 is fixed to the other end portion of the first heating plate 51 and the other end portion of the second heating plate 52 in the sheet transporting directions T1 and T2, and the inverting roller 63 is rotatably provided at the attachment bracket 64. The axis direction length of the inverting roller 63 is set to a width wider than the width of the top liner C, and the inverting roller is supported by a supporting shaft (not illustrated) in the width direction of each of the heating plates 51 and 52. The inverting roller 63 is disposed such that an outer circumferential surface thereof is positioned on the extension lines of the first heating surface 61 and the second heating surface 62.

In the preheater 14, the first heating plate 51 is disposed on the upstream side in the sheet transporting directions T1 and T2, and the second heating plate 52 is disposed on the downstream side in the sheet transporting directions T1 and T2. In addition, the first guide roller 56 is disposed on the upstream side in the sheet transporting direction T1, and the second guide roller 57 is disposed on the downstream side in the sheet transporting direction T2. A guide roller 65 is disposed on the upstream side of the first guide roller 56 in the sheet transporting direction.

For this reason, the top liner C is guided by the guide roller 65 so as to be led to the preheater 14. By being guided by the first guide roller 56, the top liner is led such that the top liner comes into contact with the first heating surface 61 of the first heating plate 51. The transporting direction of the top liner C that travels in the sheet transporting direction T1 such that the top liner comes into contact with the first heating surface 61 of the first heating plate 51 is inverted by the inverting roller 63, and the top liner is led such that the top liner comes into contact with the second heating surface 62 of the second heating plate 52. By being guided by the second guide roller 57, the top liner C, which travels in the sheet transporting direction T2 such that the top liner comes into contact with the second heating surface 62 of the second heating plate 52, is led to the belt roll 41.

The first heating plate 51 and the second heating plate 52 joined together by the respective joining members 53 and 54 are set such that the first heating surface 61 and the second heating surface 62 are in a shape of protruding outward and lengths thereof in a longitudinal direction are larger than lengths in a height direction. In the first heating plate 51, the first heating surface 61 protrudes to the outside of a straight line connecting an outer circumferential portion of the first guide roller 56 and an outer circumferential portion of the inverting roller 63 together. In the second heating plate 52, the second heating surface 62 protrudes to the outside of a straight line connecting an outer circumferential portion of the second guide roller 57 and the outer circumferential portion of the inverting roller 63 together.

The heating sections 55 heat the first heating plate 51 and the second heating plate 52 with steam. The heating sections 55 each is configured with an inlet header 71, an intermediate header 72, an outlet header 73, a plurality of upstream side heating medium flow passages 74, and a plurality of downstream side heating medium flow passages 75. Inside one end portion of the first heating plate 51 in the width direction intersecting the sheet transporting direction T1, the inlet header 71 and the outlet header 73 are formed serially in the sheet transporting direction T1. In addition, inside the other end portion of the first heating plate 51 in the width direction intersecting the sheet transporting direction T1, the intermediate header 72 is formed in the sheet transporting direction T1. The inlet header 71 and the intermediate header 72 are connected together by the plurality of upstream side heating medium flow passages 74, and the intermediate header 72 and the outlet header 73 are connected together by the plurality of downstream side heating medium flow passages 75. Since the plurality of upstream side heating medium flow passages 74 turn back in parallel with the plurality of downstream side heating medium flow passages 75, a pressure loss is small compared to heating medium flow passages that serially turn back and a decrease in the temperature of a heating medium is small. A heating medium supply pipe 76 is connected to the inlet header 71, and a heating medium discharge pipe 77 is connected to the outlet header 73. In this case, the number of times that the heating medium turns back may be increased by providing the intermediate header 72 between the inlet header 71 and the outlet header 73.

For this reason, the heating medium (steam) supplied to the inlet header 71 by the heating medium supply pipe 76 flows to the intermediate header 72 through the plurality of upstream side heating medium flow passages 74, flows from the intermediate header 72 to the outlet header 73 through the plurality of downstream side heating medium flow passages 75, and is discharged from the heating medium discharge pipe 77 to the outside. The first heating plate 51 is heated by the heating medium flowing in the plurality of upstream side heating medium flow passages 74 and the plurality of downstream side heating medium flow passages 75. Then, heat is transferred from the heated first heating surface 61 of the first heating plate 51 to the top liner, and thus the temperature of the top liner C that travels while staying in contact with the first heating surface 61 rises.

At this time, the temperature of the heating medium flowing in the plurality of upstream side heating medium flow passages 74 on an intermediate header 72 side is lower than a temperature thereof on an inlet header 71 side, and the temperature of the heating medium flowing in the plurality of downstream side heating medium flow passages 75 on an outlet header 73 side is lower than the temperature thereof on the intermediate header 72 side. For this reason, variations in the temperature of the top liner C heated by the first heating surface 61 of the first heating plate 51 in the width direction nearly disappears. In addition, since the heating medium flows from the downstream side (upstream side heating medium flow passages 74) to the upstream side (downstream side heating medium flow passages 75) of the sheet transporting direction T1, a temperature difference between the heating medium and the top liner C is ensured and thus the top liner C can be efficiently heated.

The heating section 55 of the first heating plate 51 is described as a unit configured with the inlet header 71, the intermediate header 72, the outlet header 73, the plurality of upstream side heating medium flow passages 74, and the plurality of downstream side heating medium flow passages 75. The heating sections 55 of the second heating plate 52 as well has almost the same configuration although not illustrated.

As described above, in the sheet heating apparatus of the first embodiment, the first heating plate 51 on which the first heating surface 61 is curved in a convex shape, a second heating plate 52 on which the second heating surface 62 is curved in a convex shape, the joining members 53 and 54 that integrally join the first heating plate 51 and the second heating plate 52 together such that the first heating surface 61 and the second heating surface 62 face outward, the heating sections 55 that heat the first heating plate 51 and the second heating plate 52, and the guide rollers 56 and 57 that guide the top liner C such that the top liner comes into contact with the first heating surface 61 and the second heating surface 62 are provided.

The first heating plate 51 and the second heating plate 52 are heated by the heating sections 55. Thus, when the top liner C travels while being guided by the respective guide rollers 56 and 57 such that the top liner comes into contact with the first heating surface 61 and the second heating surface 62, heat is transferred from the first heating surface 61 and the second heating surface 62 and the temperature of the top liner C rises. At this time, since the first heating plate 51 and the second heating plate 52 are joined together by the joining members 53 and 54 and the first heating surface 61 and the second heating surface 62 are provided on the outside, the apparatus can be made thinner compared to a heating drum of the related art, which is in a cylindrical shape, and an increase in the size of the apparatus can be suppressed.

In addition, since the first heating plate 51 and the second heating plate 52 are joined together by the joining members 53 and 54 with the back surfaces of the first heating plate and the second heating plate opposed to each other, even when heat is transferred from the first heating surface 61 and a second heating surface side 62 to the top liner C and the temperatures of the first heating surface and the second heating surface decrease, the respective heating plates 51 and 52 stretch to suppress thermal deformation and the top liner C comes into close contact with the first heating surface 61 and the second heating surface 62 without a gap, such that heat is transferred. Thus, the top liner C can be efficiently heated.

In the sheet heating apparatus of the first embodiment, the inverting roller 63, which inverts the sheet transporting directions T1 and T2 of the top liner C, is provided on the other end portion of the first heating plate 51 and the other end portion of the second heating plate 52, which are joined together by the joining members 53 and 54, in the sheet transporting directions T1 and T2. Accordingly, the transporting direction of the top liner C is inverted by the inverting roller 63 such that the top liner transitions from the first heating surface 61 to a second heating surface 62, and thus the top liner C can stably travel.

In the sheet heating apparatus of the first embodiment, one end portion of the first heating plate 51 and one end portion of the second heating plate 52 in the sheet transporting directions T1 and T2 are joined together by the first joining member 53, the other end portion of the first heating plate 51 and the other end portion of the second heating plate 52 in the sheet transporting directions T1 and T2 are joined together by the second joining member 54, and the inverting roller 63 is rotatably provided at the second joining member 54. Accordingly, end portions of the first heating plate 51 and the second heating plate 52 in the sheet transporting directions T1 and T2 are joined together by the joining members 53 and 54 respectively. Even when the temperature of the first heating surface 61 and the temperature of the second heating surface 62 decrease, the deformation of each of the heating plates 51 and 52 is suppressed and the top liner C can travel while staying in close contact with the first heating surface 61 and the second heating surface 62 without a gap. By the second joining member 54 being provided with the inverting roller 63 at, the top liner C can be smoothly inverted from the first heating surface 61 to the second heating surface 62.

In the sheet heating apparatus of the first embodiment, the first guide roller 56 is disposed on one end portion of the first heating plate 51, and the second guide roller 57 is disposed on one end portion of the second heating plate 52. Accordingly, when the top liner C has traveled along the first heating surface 61 by the first guide roller 56 and has inverted by the inverting roller 63 to transition to the second heating surface 62, the top liner travels along the second heating surface 62 by the second guide roller 57 and the top liner C can stably travel along each of the heating plates 51 and 52.

In the sheet heating apparatus of the first embodiment, the inlet header 71 and the outlet header 73, which are arranged at each of one end portion of the first heating plate 51 and one end portion of the second heating plate 52 in the width direction, the intermediate header 72 that is arranged at the other end portion of the first heating plate and the other end portion of the second heating plate in the width direction, the plurality of upstream side heating medium flow passages 74 that connect the inlet header 71 and the intermediate header 72 together, and the plurality of downstream side heating medium flow passages 75 that connect the intermediate header 72 and the outlet header 73 together are provided in each of the heating sections 55. Accordingly, a heating medium supplied to the inlet header 71 flows in the intermediate header 72 through the plurality of upstream side heating medium flow passages 74, and flows in the outlet header 73 through the plurality of downstream side heating medium flow passages 75. At this time, the temperature of the heating medium passing through each of the heating medium flow passages 74 and 75 gradually decreases, and the heating medium passing through each of the upstream side heating medium flow passages 74 and the heating medium passing through each of the downstream side heating medium flow passages 75 have opposite flowing directions. Thus, in each of the heating plates 51 and 52, the amount of heat transfer to the top liner C is uniformized in the width direction, and variations in the heating amount of the top liner C can be suppressed.

In addition, the single facer of the first embodiment has the preheater (sheet heating apparatus) 14 that heats the top liner C, and pastes the top liner C heated by the preheater 14 to the corrugated medium B, thereby manufacturing the single-faced cardboard sheet D. Accordingly, since the preheater 14 is configured such that the first heating plate 51 and the second heating plate 52 having the first heating surface 61 and the second heating surface 62 are joined together, an increase in the size of the apparatus can be suppressed and the top liner C can be efficiently heated.

In the single facer of the first embodiment, the preheater 14 is disposed above the belt roll 41, the tension roll 42, and the pressurizing belt 43. Accordingly, since an increase in the size of the preheater 14 can be suppressed, the preheater 14 can be disposed above a mechanism that pastes the top liner C to the medium B, and thus the apparatus can be made compact.

In the apparatus for manufacturing corrugated cardboard sheet of the first embodiment, the single facer 15 that manufactures the single-faced cardboard sheet D by pasting the top liner C to the corrugated medium B and the double facer 20 that manufactures the double-faced cardboard sheet E by pasting the bottom liner A to the medium B side of the single-faced cardboard sheet D manufactured by the single facer 15 are provided.

Accordingly, the single facer 15 manufactures the single-faced cardboard sheet D by pasting the top liner C to the corrugated core paper (medium B), and the double facer 20 manufactures the double-faced cardboard sheet E by pasting the bottom liner A to the medium B side of the single-faced cardboard sheet D. At this time, in the single facer 15, since the preheater 14 of the top liner C is configured such that the first heating plate 51 and the second heating plate 52 having the first heating surface 61 and the second heating surface 62 are joined together, an increase in the size of the apparatus can be suppressed and the top liner C can be efficiently heated.

### [Second embodiment]

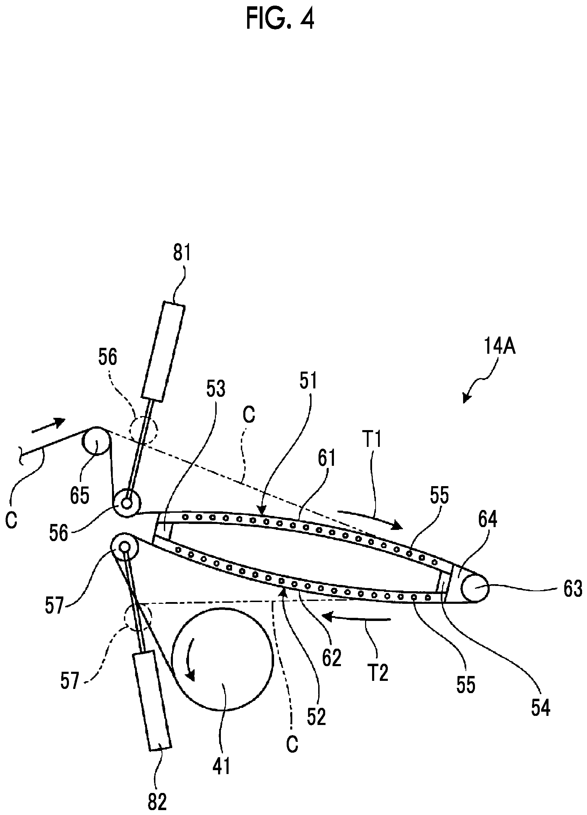

Fig. 4 is a schematic configuration view illustrating a sheet heating apparatus of a second embodiment. Members having the same functions as the embodiment described above will be assigned with the same reference signs and detailed description thereof will be omitted.

In the second embodiment, a preheater 14A is disposed above the belt roll 41 and includes the first heating plate 51, the second heating plate 52, the first joining member 53, the second joining member 54, the heating sections 55, the first guide roller 56, and the second guide roller 57, as illustrated in Fig. 4.

On the surface portion of the first heating plate 51, the first heating surface 61 that is curved in a convex shape at a predetermined curvature is formed. On the surface portion of the second heating plate 52, the second heating surface 62 that is curved in a convex shape at a predetermined curvature is formed. The first heating plate 51 and the second heating plate 52 are disposed such that the first heating surface 61 and the second heating surface 62 face outward, and are integrally joined by the first joining member 53 and the second joining member 54.

The first guide roller 56 and the second guide roller 57 guide the top liner C such that the top liner comes into contact with the first heating surface 61 and the second heating surface 62. The first guide roller 56 is disposed on one end portion of the first heating plate 51, and the second guide roller 57 is disposed on one end portion of the second heating plate 52. The inverting roller 63 is provided at the other end portion of the first heating plate 51 and the other end portion of the second heating plate 52, and inverts the sheet transporting direction T1 to the sheet transporting direction T2 of the top liner C.

In the preheater 14A of the second embodiment, a first guide roller driving unit 81 that moves the first guide roller 56 close to or apart from the first heating surface 61 of the first heating plate 51 and a second guide roller driving unit 82 that moves the second guide roller 57 close to or apart from the second heating surface 62 of the second heating plate 52 are provided. The first guide roller driving unit 81 is, for example, an air cylinder, and the first guide roller 56 is rotatably supported by a tip portion of a drive rod. Similarly, the second guide roller driving unit 82 is, for example, also an air cylinder, and the second guide roller 57 is rotatably supported by a tip portion of a drive rod. For this reason, by each of the guide roller drive units 81 and 82 changing a distance from each of the heating surfaces 61 and 62 to each of the guide rollers 56 and 57, the contact length (area) of the top liner C with respect to each of the heating surfaces 61 and 62 can be adjusted as illustrated with two-dot chain lines in Fig. 4.

Each of the guide roller drive units 81 and 82 is not limited to an air cylinder, and a drive motor, a link mechanism, a ball screw mechanism, a rack, and a pinion mechanism may be applied thereto.

The heating sections 55 heat the first heating plate 51 and the second heating plate 52 with steam, and are configured such that a plurality of heating medium flow passages are formed inside each of the heating plates 51 and 52 in the width direction.

For this reason, the top liner C is guided by the guide roller 65 so as to be led to the preheater 14A. By being guided by the first guide roller 56, the top liner is led such that the top liner comes into contact with the first heating surface 61 of the first heating plate 51. The transporting direction of the top liner C that travels in the sheet transporting direction T1 is inverted by the inverting roller 63, and the top liner is led such that the top liner comes into contact with the second heating surface 62 of the second heating plate 52. After then, the top liner C that travels in the sheet transporting direction T2 is guided by the second guide roller 57 and is led to the belt roll 41.

At this time, the first heating plate 51 and the second heating plate 52 are heated by a heating medium flowing therein. Then, the top liner C is heated for the first time when traveling while staying in contact with the first heating surface 61 of the first heating plate 51, is heated for the second time when traveling while staying in contact with the second heating surface 62 of the second heating plate 52, and thus the temperature of the top liner rises.

However, although it is not necessary for the preheater 14A to heat the top liner C to a required temperature, for example, the amount of heat transfer differs according to the type (for example, thicknesses and materials) or traveling conditions of the top liner C. For this reason, for example, in the case of heating the thin top liner C of which the temperature is likely to rise, the contact area of the top liner C with respect to each of the heating surfaces 61 and 62 can be made smaller by each of the guide roller drive units 81 and 82 making a distance from each of the heating surfaces 61 and 62 to each of the guide rollers 56 and 57 longer. Then, the amount of heat transfer from each of the heating surfaces 61 and 62 reduces, and an overheated state of the thin top liner C can be prevented.

On the other hand, in the case of heating the thick top liner C of which the temperature is unlikely to rise, the contact area of the top liner C with respect to each of the heating surfaces 61 and 62 can be made larger by each of the guide roller drive units 81 and 82 making a distance from each of the heating surfaces 61 and 62 to each of the guide rollers 56 and 57 shorter. Then, the amount of heat transfer from each of the heating surfaces 61 and 62 increases, and an insufficiently heated state of the thick top liner C can be prevented.

In a case where the traveling speed of the top liner C is slow, a distance from each of the heating surfaces 61 and 62 to each of the guide rollers 56 and 57 is made longer to make the contact area of the top liner C with respect to each of the heating surfaces 61 and 62 smaller. In a case where the traveling speed of the top liner C is fast, a distance from each of the heating surfaces 61 and 62 to each of the guide rollers 56 and 57 is made shorter to make the contact area of the top liner C with respect to each of the heating surfaces 61 and 62 larger. In addition, by separately driving each of the guide roller drive units 81 and 82, a distance from the first heating surface 61 to the first guide roller 56 and a distance from the second heating surface 62 to the second guide roller 57 may be made different from each other.

As described above, in the sheet heating apparatus of the second embodiment, the first heating plate 51, the second heating plate 52, the joining members 53 and 54 that join the first heating plate 51 and the second heating plate 52 together, the heating sections 55 that heat the first heating plate 51 and the second heating plate 52 respectively, the guide rollers 56 and 57 that guide the top liner C such that the top liner comes into contact with the first heating surface 61 and the second heating surface 62, the first guide roller driving unit 81 that moves the first guide roller 56 close to or apart from the first heating surface 61, and the second guide roller driving unit 82 that moves the second guide roller 57 close to or apart from the second heating surface 62 are provided.

Accordingly, by each of the guide roller drive units 81 and 82 adjusting the position of each of the guide rollers 56 and 57 with respect to each of the heating surfaces 61 and 62 according to the type or traveling conditions of the top liner C, the contact length (contact area) of the top liner C with respect to each of the heating surfaces 61 and 62 can be adjusted. As a result, the heating temperature of the top liner C can be easily adjusted, and even when the type or traveling conditions of the top liner C have changed, the top liner C can be heated to a desired temperature.

### [Third embodiment]

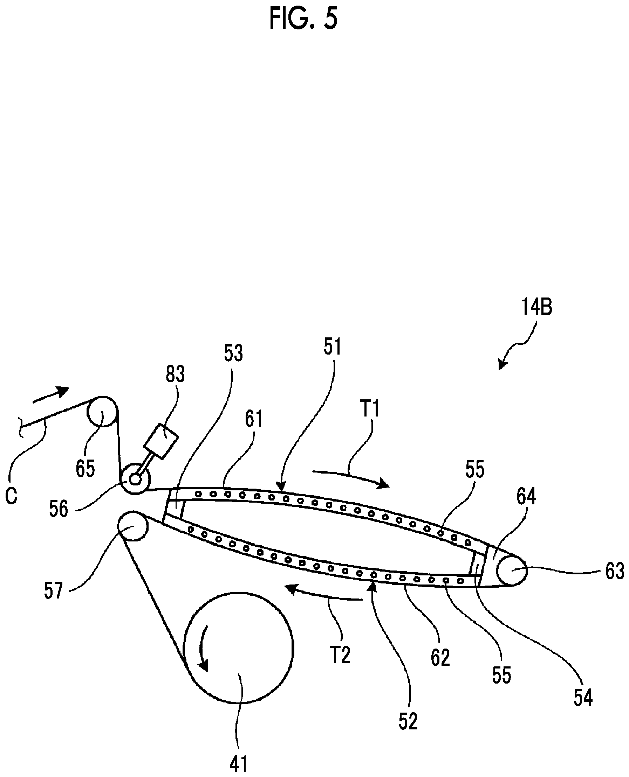

Fig. 5 is a schematic configuration view illustrating a sheet heating apparatus of a third embodiment. Members having the same functions as the embodiment described above will be assigned with the same reference signs and detailed description thereof will be omitted.

In the third embodiment, a preheater 14B is disposed above the belt roll 41 and includes the first heating plate 51, the second heating plate 52, the first joining member 53, the second joining member 54, the heating sections 55, the first guide roller 56, and the second guide roller 57, as illustrated in Fig. 5.

In the preheater 14B of the third embodiment, a first guide roller rotational resistance adjusting unit 83 that adjusts the rotational resistance of the first guide roller 56 is provided. The first guide roller rotational resistance adjusting unit 83 is, for example, a brake device (friction type), and is connected to a hydraulic pipe that operates a brake pad (not illustrated) provided in the first guide roller 56 from the outside.

By the first guide roller rotational resistance adjusting unit 83 adjusting the rotational resistance of the first guide roller 56, the tension of the top liner C that travels in the sheet transporting directions T1 and T2 can be adjusted. In this case, when the first guide roller rotational resistance adjusting unit 83 makes the rotational resistance of the first guide roller 56 higher, the tension of the top liner C that travels in the sheet transporting directions T1 and T2 becomes higher, and when the first guide roller rotational resistance adjusting unit makes the rotational resistance of the first guide roller 56 lower, the tension of the top liner C that travels in the sheet transporting directions T1 and T2 becomes lower.

The first guide roller rotational resistance adjusting unit 83 is not limited to the brake device. A drive motor may be applied thereto, or both of the brake device and the drive motor may be provided.

For this reason, although it is necessary for the preheater 14B to heat the top liner C to a required temperature, the amount of heat transfer differs according to, for example, the type (for example, thicknesses and materials) or traveling conditions of the top liner C. For example, in a case where the thick top liner C of which the temperature is unlikely to rise is heated, the tension of the top liner C is adjusted by the first guide roller rotational resistance adjusting unit 83 changing the rotational resistance of the first guide roller 56. Then, surface pressures with respect to the first heating surface 61 and second heating surface 62 rise, the amounts of heat transfer from the first heating surface 61 and the second heating surface 62 increase, and thus an insufficiently heated state of the thick top liner C can be prevented.

As described above, in the sheet heating apparatus of the third embodiment, the first heating plate 51, the second heating plate 52, the joining members 53 and 54 that join the first heating plate 51 and the second heating plate 52 together, the heating sections 55 that heat the first heating plate 51 and the second heating plate 52 respectively, the guide rollers 56 and 57 that guide the top liner C such that the top liner comes into contact with the first heating surface 61 and the second heating surface 62, and the first guide roller rotational resistance adjusting unit 83 that adjusts the rotational resistance of the first guide roller 56 are provided.

Accordingly, by the first guide roller rotational resistance adjusting unit 83 adjusting the rotational resistance of the first guide roller 56 according to the type or traveling conditions of the top liner C, the tension of the top liner C is adjusted and thus the contact surface pressure of the top liner C with respect to each of the first heating surface 61 and the second heating surface 62 can be adjusted. As a result, the heating temperature of the top liner C can be easily adjusted, and even when the type or traveling conditions of the top liner C have changed, the top liner C can be heated to a desired temperature.

### [Fourth embodiment]

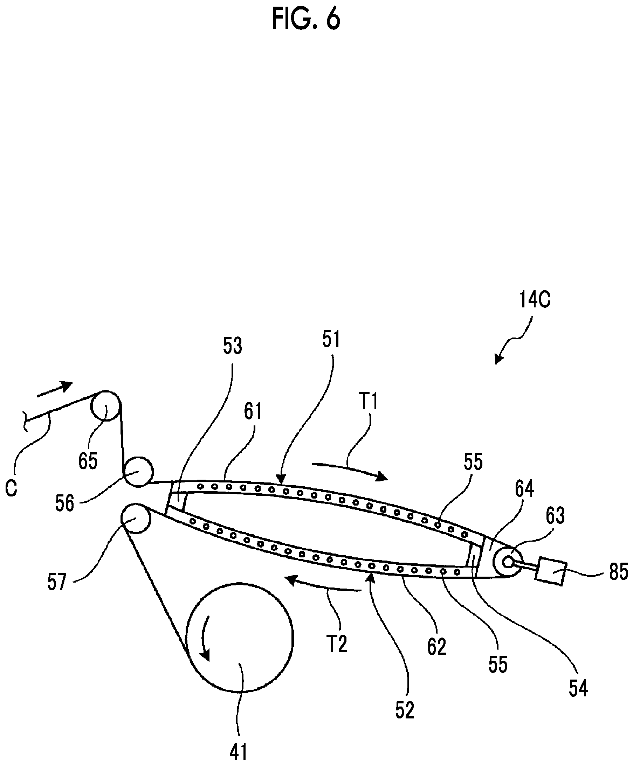

Fig. 6 is a schematic configuration view illustrating a sheet heating apparatus of a fourth embodiment. Members having the same functions as the embodiment described above will be assigned with the same reference signs and detailed description thereof will be omitted.

In the fourth embodiment, a preheater 14C is disposed above the belt roll 41 and includes the first heating plate 51, the second heating plate 52, the first joining member 53, the second joining member 54, the heating sections 55, the first guide roller 56, the second guide roller 57, and the inverting roller 63 that inverts the transporting direction of the top liner C, as illustrated in Fig. 6.

In the preheater 14C of the fourth embodiment, an inverting roller rotational resistance adjusting unit 85 that adjusts the rotational resistance of the inverting roller 63 is provided. The inverting roller rotational resistance adjusting unit 85 is, for example, a brake device (friction type), and is connected to a hydraulic pipe that operates a brake pad (not illustrated) provided in the inverting roller 63 from the outside.

By the inverting roller rotational resistance adjusting unit 85 adjusting the rotational resistance of the inverting roller 63, the tension of the top liner C that travels in each of the sheet transporting directions T1 and T2 can be adjusted. In this case, when the inverting roller rotational resistance adjusting unit 85 makes the rotational resistance of the inverting roller 63 higher, the tension of the top liner C that travels in the sheet transporting direction T1 becomes lower and the tension of the top liner C that travels in the sheet transporting direction T2 becomes higher. On the other hand, when the inverting roller rotational resistance adjusting unit 85 makes the rotational resistance of the inverting roller 63 lower, the tension of the top liner C that travels in the sheet transporting direction T1 becomes higher and the tension of the top liner C that travels in the sheet transporting direction T2 becomes lower.

For this reason, in a case where it is intended that the amount of heat transfer to the top liner C is changed by the first heating plate 51 and the second heating plate 52, the tension of the top liner C in each of the sheet transporting directions T1 and T2 is changed by the inverting roller rotational resistance adjusting unit 85 adjusting the rotational resistance of the inverting roller 63. Then, the surface pressure of the top liner C with respect to each of the heating surfaces 61 and 62 is changed and the amount of heat transfer from each of the heating surfaces 61 and 62 is adjusted.

As described above, in the sheet heating apparatus of the fourth embodiment, the first heating plate 51, the second heating plate 52, the joining members 53 and 54 that join the first heating plate 51 and the second heating plate 52 together, the heating sections 55 that heat the first heating plate 51 and the second heating plate 52 respectively, the guide rollers 56 and 57 that guide the top liner C such that the top liner comes into contact with the first heating surface 61 and the second heating surface 62, the inverting roller 63 that inverts the transporting direction of the top liner C, and the inverting roller rotational resistance adjusting unit 85 that adjusts the rotational resistance of the inverting roller 63 are provided.

Accordingly, by the inverting roller rotational resistance adjusting unit 85 adjusting the rotational resistance of the inverting roller 63 according to the type or traveling conditions of the top liner C, the tension of the top liner C in each of the sheet transporting directions T1 and T2 is adjusted and thus the contact surface pressure of the top liner C with respect to each of the heating surfaces 61 and 62 can be adjusted. As a result, the heating temperature of the top liner C can be easily adjusted, and even when the type or traveling conditions of the top liner C have changed, the top liner C can be heated to a desired temperature.

### [Fifth embodiment]

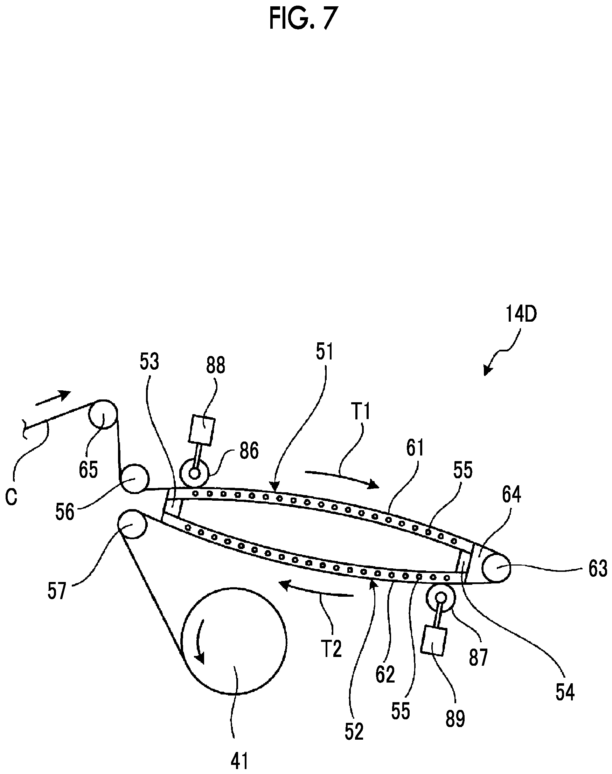

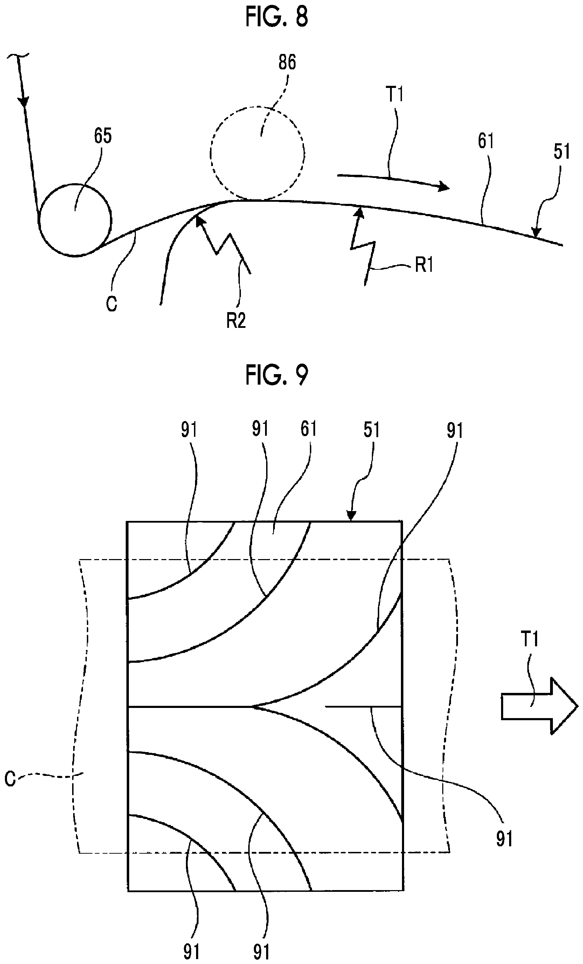

Fig. 7 is a schematic configuration view illustrating a sheet heating apparatus of a fifth embodiment, Fig. 8 is a detailed view of main portions of a first heating plate, and Fig. 9 is a plan view illustrating a modification example of the first heating plate. Members having the same functions as the embodiment described above will be assigned with the same reference signs and detailed description thereof will be omitted.

In the fifth embodiment, a preheater 14D is disposed above the belt roll 41 and includes the first heating plate 51, the second heating plate 52, the first joining member 53, the second joining member 54, the heating sections 55, the first guide roller 56, the second guide roller 57, and a first pressing roller (first pressing member) 86 and a second pressing roller (second pressing member) 87, each of which presses the top liner C against each of the heating surfaces 61 and 62 on an end portion of each of the heating plates 51 and 52, as illustrated in Fig. 7.

In the preheater 14D of the fifth embodiment, the first pressing roller 86 that presses the top liner C against the first heating surface 61 at one end portion of the first heating plate 51 and the second pressing roller 87 that presses the top liner C against the second heating surface 62 on the other end portion of the second heating plate 52 are provided. When the first guide roller 56 brings the top liner C into contact with the first heating surface 61 and air infiltrates between the top liner C and the first heating surface 61, the efficiency of heat transfer from the first heating surface 61 to the top liner C decreases due to air insulation. The first pressing roller 86 presses the top liner C against the first heating surface 61 on the upstream side in the sheet transporting direction T1 on the first heating plate 51 to prevent air from infiltrating between the top liner C and the first heating surface 61. Similarly, the second pressing roller 87 presses the top liner C against the second heating surface 62 on the upstream side in the sheet transporting direction T2 on the second heating plate 52 to prevent air from infiltrating between the top liner C and the second heating surface 62.

In addition, in the preheater 14D of the fifth embodiment, a first pressing force adjusting unit 88 that adjusts a pressing force exerted by the first pressing roller 86 and a second pressing force adjusting unit 89 that adjusts a pressing force exerted by the second pressing roller 87 are provided. The first pressing force adjusting unit 88 is, for example, an air cylinder, and the first pressing roller 86 is rotatably supported by a tip portion of a drive rod. Similarly, the second pressing force adjusting unit 89 is, for example, also an air cylinder, and the second pressing roller 87 is rotatably supported by a tip portion of a drive rod.

By each of the pressing force adjusting units 88 and 89 adjusting a pressing force exerted by each of the pressing rollers 86 and 87, the amount of air infiltrating between the top liner C that travels in each of the sheet transporting directions T1 and T2 and each of the heating surfaces 61 and 62 can be adjusted.

For this reason, the top liner C is guided by the guide roller 65 so as to be led to the preheater 14D. By being guided by the first guide roller 56, the top liner C is heated for the first time when the top liner is led and travels such that the top liner comes into contact with the first heating surface 61 of the first heating plate 51. Then the transporting direction of the top liner C that travels in the sheet transporting direction T1 is inverted by the inverting roller 63, and is heated for the second time when the top liner is led and travels such that the top liner comes into contact with the second heating surface 62 of the second heating plate 52. After then, the top liner C that travels in the sheet transporting direction T2 is guided by the second guide roller 57 and is led to the belt roll 41.

At this time, by the first pressing roller 86 pressing the top liner C, which is brought into contact with the first heating surface 61 by the first guide roller 56, against the first heating surface 61, the infiltration of air between the top liner C and the first heating surface 61 is suppressed. In addition, by the second pressing roller 87 pressing the top liner C, which is brought into contact with the second heating surface 62 by the inverting roller 63, against the second heating surface 62, the infiltration of air between the top liner C and the second heating surface 62 is suppressed.

However, the curvature of an upstream end portion of the first heating plate 51 in the sheet transporting direction T1 is set to be higher than the curvature of a downstream side of the upstream end portion of the first heating plate in the sheet transporting direction T1, as illustrated in Fig. 8. That is, a curvature radius R2 of an upstream end portion of the first heating surface 61 in the sheet transporting direction T1 is set so as to be smaller than a curvature radius R1 of a downstream side of the first heating surface 61 in the sheet transporting direction T1. For this reason, when the top liner C comes into contact with the first heating surface 61, a contact angle with respect to the first heating surface 61 becomes larger, wedging between the top liner C and the first heating surface 61 reduces, and air becomes unlikely to enter between the top liner C and the first heating surface 61.

Although not illustrated, the curvature of an upstream end portion of the second heating plate 52 in the sheet transporting direction T2 is set to be higher than the curvature of a downstream side of the upstream end portion of the second heating plate in the sheet transporting direction T2, as illustrated in Fig. 8.

In the embodiment, it is not necessary to combine configurations of the first pressing roller 86 and the second pressing roller 87, or the configurations of the first pressing roller 86 and the second pressing roller 87 may be combined.

In addition, as illustrated in Fig. 9, a plurality of groove portions 91 running along a direction intersecting the sheet transporting direction T1 are provided in the surface of the first heating surface 61 of the first heating plate 51. The plurality of groove portions 91 are open to the upstream side in the sheet transporting direction T1, and on the downstream side, the groove portions are curved and open outward in the width direction. For this reason, even when the top liner C comes into contact with the first heating surface 61 and air infiltrates between the top liner C and the first heating surface 61, the air is discharged from each of the groove portions 91 to the outside and the top liner C comes into close contact with the first heating surface 61 without a gap. A plurality of groove portions may also be provided in the surface of the second heating surface 62 of the second heating plate 52.

In the embodiment, it is not necessary to combine the configurations of the first pressing roller 86 and the second pressing roller 87 and the configurations of the curvature radii R1 and R2 of the first heating surface 61 in the sheet transporting direction T1, and the configurations of the first pressing roller 86 and the second pressing roller 87 and the configurations of the curvature radii R1 and R2 of the first heating surface 61 in the sheet transporting direction T1 may be combined.

As described above, in the sheet heating apparatus of the fifth embodiment, the first heating plate 51, the second heating plate 52, the joining members 53 and 54 that join the first heating plate 51 and the second heating plate 52 together, the heating sections 55 that heat the first heating plate 51 and the second heating plate 52 respectively, the guide rollers 56 and 57 that guide the top liner C such that the top liner comes into contact with the first heating surface 61 and the second heating surface 62, and the first pressing roller 86 and the second pressing roller 87 that press the top liner C against the respective heating surfaces 61 and 62 on end portions of the respective heating plates 51 and 52are provided.

Accordingly, the top liner C is pressed against the first heating surface 61 by the first pressing roller 86 on the upstream side of the first heating plate 51 in the sheet transporting direction T1, and is pressed against the second heating surface 62 by the second pressing roller 87 on the upstream side of the second heating plate 52 in the sheet transporting direction T2. Then, when the top liner C comes into contact with each of the heating surfaces 61 and 62, the infiltration of air between the top liner C and each of the heating surfaces 61 and 62 can be suppressed and the efficiency of heat transfer from each of the heating surfaces 61 and 62 to the top liner C can be improved.

In the sheet heating apparatus of the fifth embodiment, the first pressing force adjusting unit 88 that adjusts a pressing force exerted by the first pressing roller 86 and the second pressing force adjusting unit 89 that adjusts a pressing force exerted by the second pressing roller 87 are provided. Accordingly, by each of the pressing force adjusting units 88 and 89 adjusting a pressing force exerted by each of the pressing rollers 86 and 87, the adhesion of the top liner C with respect to each of the heating surfaces 61 and 62 can be adjusted, and the heating temperature of the top liner C can be adjusted by adjusting the adhesion between the top liner C and the first heating surface 61 and the second heating surface 62.

In the sheet heating apparatus of the fifth embodiment, a curvature at an upstream end portion of each of the first heating surface 61 and the second heating surface 62 is set to be higher than that at a downstream side in the sheet transporting direction. Accordingly, when the top liner C comes into contact with each of the heating surfaces 61 and 62, the contact angle of the top liner C with respect to each of the heating surfaces 61 and 62 becomes larger, wedging between the top liner C and each of the heating surfaces 61 and 62 reduces, and the infiltration of air between the top liner C and each of the heating surfaces 61 and 62 can be suppressed.

In the sheet heating apparatus of the fifth embodiment, the plurality of groove portions 91 along a direction intersecting the transporting direction of the top liner C are provided in the surfaces of the first heating surface 61 and the second heating surface 62. Accordingly, when the top liner C travels while staying in contact with each of the heating surfaces 61 and 62, air infiltrated between the top liner C and each of the heating surfaces 61 and 62 is discharged to the outside through the plurality of groove portions 91, the adhesion of the top liner C with respect to each of the heating surfaces 61 and 62 is enhanced, and thus the efficiency of heat transfer can be improved.

### [Sixth embodiment]

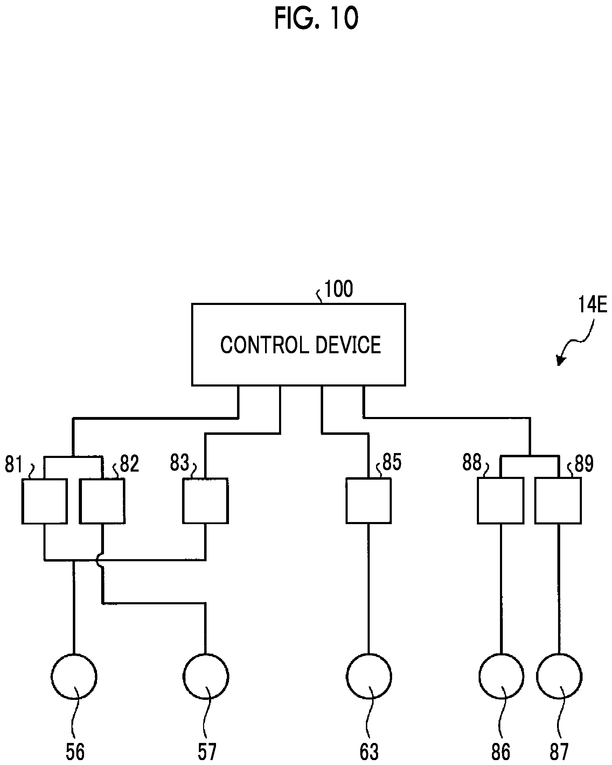

Fig. 10 is a schematic configuration diagram showing a sheet heating apparatus of a sixth embodiment. Members having the same functions as the embodiment described above will be assigned with the same reference signs and detailed description thereof will be omitted.

In the sixth embodiment, as shown in Fig. 10, a preheater 14E includes the first guide roller 56, the second guide roller 57, the inverting roller 63, the first pressing roller 86, and the second pressing roller 87. In addition, the first guide roller driving unit 81 and the second guide roller driving unit 82, which move the respective guide rollers 56 and 57 close to or apart from the respective heating surfaces 61 and 62 of the heating plates 51 and 52, the first guide roller rotational resistance adjusting unit 83 that adjusts the rotational resistance of the first guide roller 56, the inverting roller rotational resistance adjusting unit 85 that adjusts the rotational resistance of the inverting roller 63, and the first pressing force adjusting unit 88 and the second pressing force adjusting unit 89, which adjust pressing forces exerted by the pressing rollers 86 and 87 respectively, are provided.

A control device 100 can control each of the guide roller drive units 81 and 82, the first guide roller rotational resistance adjusting unit 83, the inverting roller rotational resistance adjusting unit 85, and each of the pressing force adjusting units 88 and 89. In this case, the control device 100 adjusts each of the guide roller drive units 81 and 82, the first guide roller rotational resistance adjusting unit 83, the inverting roller rotational resistance adjusting unit 85, and each of the pressing force adjusting units 88 and 89 in this order according to a heated state of the top liner C caused by the first heating plate 51 and the second heating plate 52 (refer to Fig. 2). In this case, a temperature sensor that measures the heating temperature of the top liner C raised by the first heating plate 51 and the second heating plate 52 is provided, and the control device 100 controls such that the temperature of the top liner C that has traveled the first heating plate 51 and the temperature of the top liner C that has traveled the second heating plate 52, which are measured by the temperature sensor, fall within a required temperature range set in advance.

As described above, in the sheet heating apparatus of the sixth embodiment, by adjusting the positions of the guide rollers 56 and 57, the rotational resistance of the first guide roller 56, the rotational resistance of the inverting roller 63, the pressing forces exerted by the pressing rollers 86 and 87, which have a great influence as factors heating the top liner C, in this order according to the heated state of the top liner C, the amount of heat transfer to the top liner C can be adjusted with high accuracy.

### [Seventh embodiment]

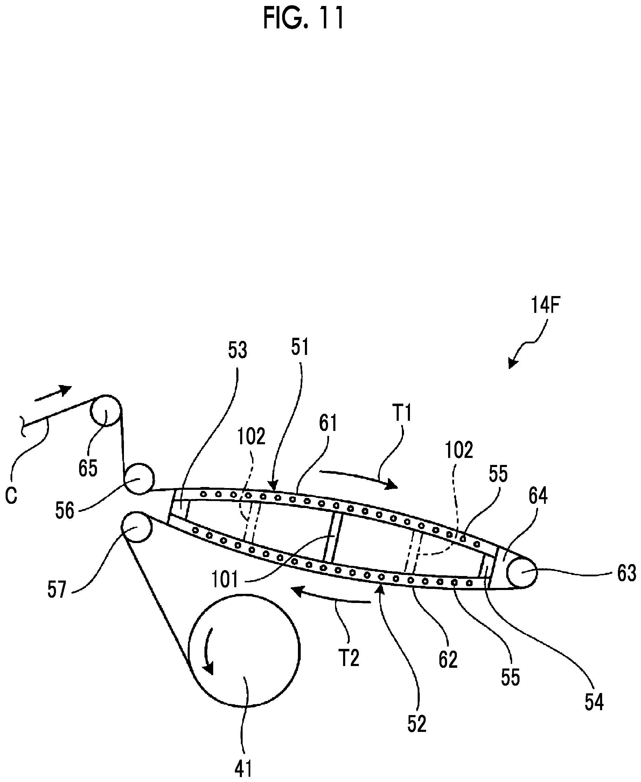

Fig. 11 is a schematic configuration view illustrating a sheet heating apparatus of a seventh embodiment. Members having the same functions as the embodiment described above will be assigned with the same reference signs and detailed description thereof will be omitted.

In the seventh embodiment, a preheater 14F includes the first heating plate 51, the second heating plate 52, the first joining member 53, the second joining member 54, the heating sections 55, the first guide roller 56, the second guide roller 57, and the inverting roller 63, as illustrated in Fig. 11.

The first heating surface 61 is formed on the first heating plate 51, the second heating surface 62 is formed on the second heating plate 52, and respective end portions of the heating plates 51 and 52 are integrally joined by the first joining member 53 and the second joining member 54 such that the first heating surface 61 and the second heating surface 62 face outward.

The back surfaces of the first heating plate 51 and the second heating plate 52 are joined together by a reinforcing member 101 at intermediate positions in the sheet transporting directions T1 and T2. The reinforcing member 101 is disposed in the width direction of each of the heating plates 51 and 52, and the length of the reinforcing member in the width direction of each of the heating plates 51 and 52 is almost the same length as the width of each of the heating plates 51 and 52. For this reason, even when heat is transferred from the first heating surface 61 and the second heating surface side 62 to the top liner C and the temperatures of the first heating plate 51 and the second heating plate 52 decrease, the deformation of each of the heating plates 51 and 52 is suppressed by the reinforcing member 101. Another reinforcing member 102 may be provided so as to be positioned between the first heating plate 51 and the second heating plate 52 and between each of the joining members 53 and 54 and the reinforcing member 101. Each reinforcing member 101 may be configured with a plurality of member, and the respective heating plates 51 and 52 may be partially joined together in the width direction. In addition, although the reinforcing member 101 is disposed in the width direction of each of the heating plates 51 and 52, the reinforcing member 101 may be provided in a transporting direction along the sheet transporting directions T1 and T2.

As described above, in the sheet heating apparatus of the seventh embodiment, the reinforcing member 101 that joins intermediate portions of the first heating plate 51 and the second heating plate 52 in the sheet transporting directions T1 and T2 is provided as a joining member. Accordingly, the deformation of the first heating plate 51 and the second heating plate 52 can be suppressed by the reinforcing member 101, and the top liner C can be efficiently heated by the top liner C coming into close contact with the first heating surface 61 and the second heating surface 62 without a gap and heat being transferred.

### [Eighth embodiment]

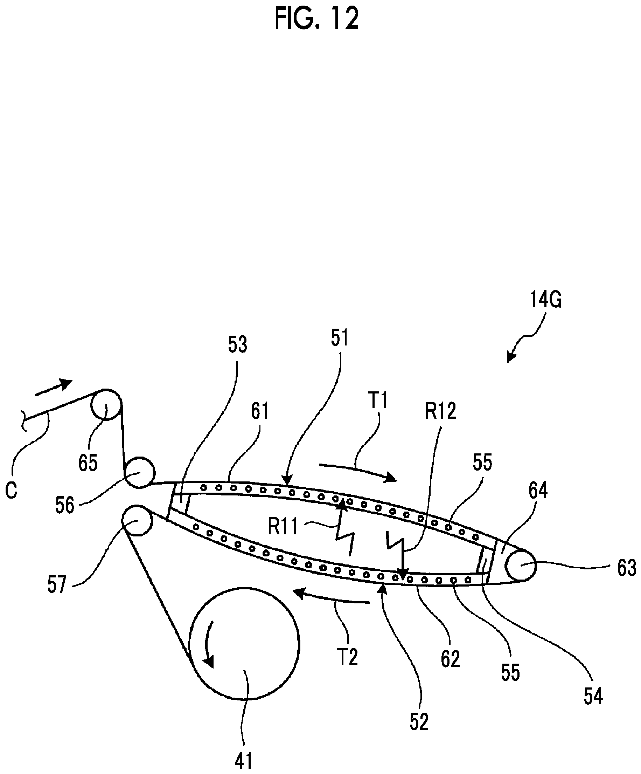

Fig. 12 is a schematic configuration view illustrating a sheet heating apparatus of an eighth embodiment. Members having the same functions as the embodiment described above will be assigned with the same reference signs and detailed description thereof will be omitted.

In the eighth embodiment, a preheater 14G includes the first heating plate 51, the second heating plate 52, the first joining member 53, the second joining member 54, the heating sections 55, the first guide roller 56, the second guide roller 57, and the inverting roller 63, as illustrated in Fig. 12.

The first heating surface 61 is formed on the first heating plate 51, the second heating surface 62 is formed on the second heating plate 52, and respective end portions of the heating plates 51 and 52 are integrally joined by the first joining member 53 and the second joining member 54 such that the first heating surface 61 and the second heating surface 62 face outward.

The curvature of the first heating surface 61 that forms the sheet transporting direction T1, which is the upstream side, is set to be lower than the curvature of the second heating surface 62 that forms the sheet transporting direction T2, which is the downstream side. That is, a curvature radius R11 of the first heating surface 61 is set so as to be larger than a curvature radius R12 of the second heating surface 62. Since the temperature of the top liner C gradually rises when the top liner C travels from the first heating surface 61 to the second heating surface 62, a temperature difference between the top liner C and the second heating surface 62 is smaller than a temperature difference between the top liner C and the first heating surface 61. Since the curvature of the second heating surface 62 is high, a contact pressure between the top liner C and the second heating surface 62 is high and the amount of heat transfer from the second heating surface 62 to the top liner C increases.

As described above, in the sheet heating apparatus of the eighth embodiment, the curvature of the first heating surface 61 that forms the sheet transporting direction T1, which is the upstream side, is set to be lower than the curvature of the second heating surface 62 that forms the sheet transporting direction T2, which is the downstream side. Accordingly, a contact pressure between the top liner C and the second heating surface 62 becomes higher, and thus the top liner C can be efficiently heated.

### [Ninth embodiment]

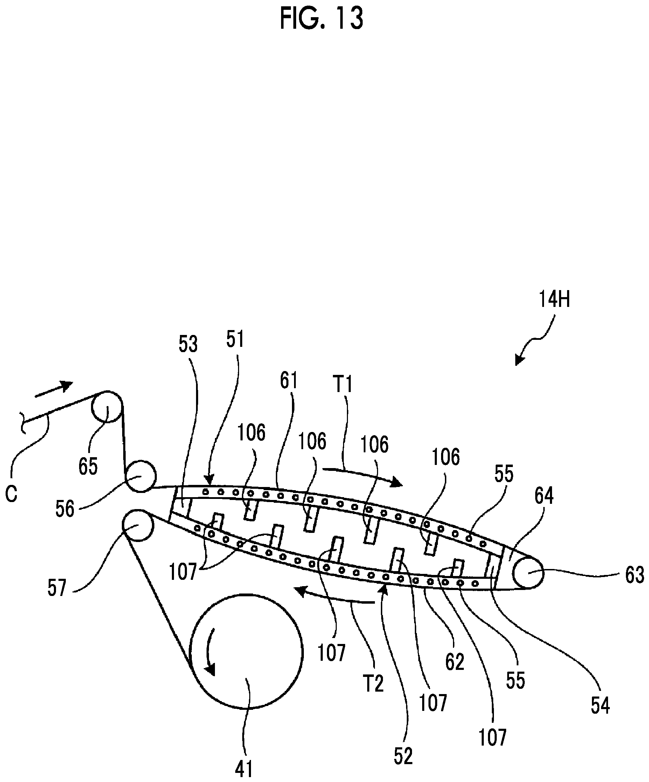

Fig. 13 is a schematic configuration view illustrating a sheet heating apparatus of a ninth embodiment. Members having the same functions as the embodiment described above will be assigned with the same reference signs and detailed description thereof will be omitted.

In the ninth embodiment, a preheater 14H includes the first heating plate 51, the second heating plate 52, the first joining member 53, the second joining member 54, the heating sections 55, the first guide roller 56, the second guide roller 57, and the inverting roller 63, as illustrated in Fig. 13.

The first heating surface 61 is formed on the first heating plate 51, the second heating surface 62 is formed on the second heating plate 52, and respective end portions of the heating plates 51 and 52 are integrally joined by the first joining member 53 and the second joining member 54 such that the first heating surface 61 and the second heating surface 62 face outward.

A plurality of fins 106 and 107 are provided on the back surfaces of the first heating plate 51 and the second heating plate 52. That is, the fins 106 extending in the width direction of the first heating plate 51 are fixed to the back surface of the first heating plate 51 at predetermined intervals in the sheet transporting direction T1. In addition, the fins 107 extending in the width direction of the second heating plate 52 are fixed to the back surface of the second heating plate 52 at predetermined intervals in the sheet transporting direction T2. In this case, the plurality of fins 106 and 107 are disposed so as to be deviated from each other in the sheet transporting directions T1 and T2.

By heat being transferred from each of the heating surfaces 61 and 62 to the top liner C when the top liner C travels from the first heating surface 61 to the second heating surface 62, the respective temperatures of the heat transfer surfaces 61 and 62 of the heating plates 51 and 52 decrease. At this time, by the fins 106 and 107 cooling the back surfaces of the heating plates 51 and 52 respectively, the temperatures of the back surfaces decrease. For this reason, a temperature difference between each of the heat transfer surfaces 61 and 62 and each back surface reduces, and thus the thermal deformation of each of the heating plates 51 and 52 is suppressed.

Flow passages of a cooling medium may be provided inside the plurality of fins 106 and 107 fixed to the back surfaces of the first heating plate 51 and the second heating plate 52, and a temperature difference between each of the heat transfer surfaces 61 and 62 and each of the back surfaces of the heating plates can be further reduced by decreasing the temperature of each of the back surfaces of the heating plates 51 and 52. On the other hand, by providing flow passages of the heating medium inside the plurality of fins 106 and 107 fixed to the back surfaces of the first heating plate 51 and the second heating plate 52 in addition to suppressing the deformation of each of the heating plates 51 and 52 by the reinforcing members, the efficiency of heating of the top liner C by each of the heating plates 51 and 52 can be improved.

As described above, in the sheet heating apparatus of the ninth embodiment, the plurality of fins 106 and 107 are provided on the back surfaces of the first heating plate 51 and the second heating plate 52.

Accordingly, in each of the heating plates 51 and 52, the top liner C takes the heat of each of the heating surfaces 61 and 62 away and the fins 106 and 107 take the heat of the back surfaces away. Therefore, a difference in a thermal elongation amount between the respective heating surfaces 61 and 62 of the heating plates 51 and 52 and the back surfaces of the heating plates reduces and thus the deformation of each of the heating plates 51 and 52 can be suppressed.

### [Tenth embodiment]

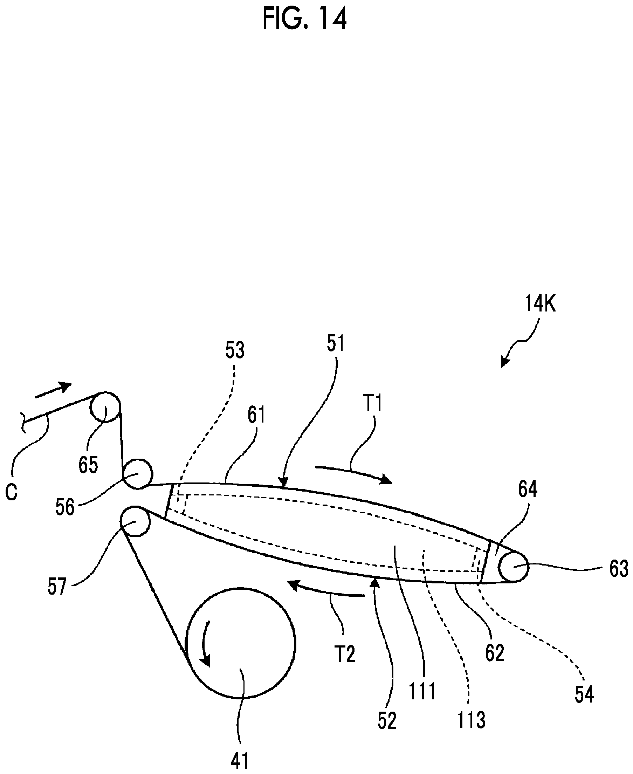

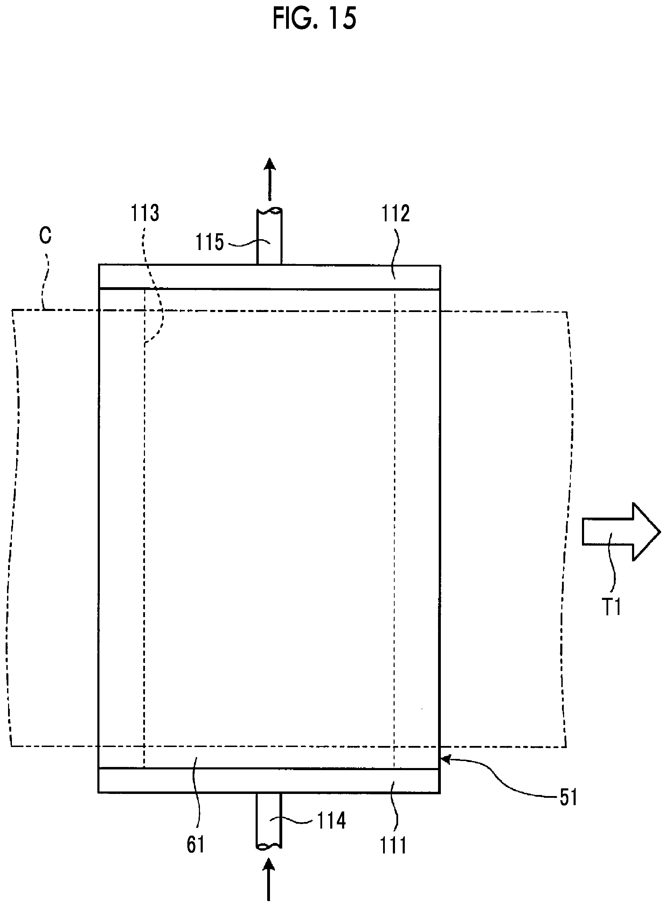

Fig. 14 is a schematic configuration view illustrating a sheet heating apparatus of a tenth embodiment, and Fig. 15 is a plan view illustrating the sheet heating apparatus. Members having the same functions as the embodiment described above will be assigned with the same reference signs and detailed description thereof will be omitted.

In the tenth embodiment, a preheater 14K includes the first heating plate 51, the second heating plate 52, the first joining member 53, the second joining member 54, a space portion 113, which is a heating section, the first guide roller 56, the second guide roller 57, and the inverting roller 63, as illustrated in Fig. 14 and Fig. 15.

The first heating surface 61 is formed on the first heating plate 51, the second heating surface 62 is formed on the second heating plate 52, and respective end portions of the heating plates 51 and 52 are integrally joined by the first joining member 53 and the second joining member 54 such that the first heating surface 61 and the second heating surface 62 face outward. In addition, the space portion 113 is defined by each of side plates 111 and 112 being fixed to each of end portions of the heating plates 51 and 52 in the width direction. In the space portion 113, an inlet portion 114, through which the heating medium is supplied, is provided in one side plate 111, and an outlet portion 115, from which the heating medium is discharged, is provided in the other side plate 112.

For this reason, the heating section is configured with the space portion 113 defined by the first heating plate 51, the second heating plate 52, and each of the side plates 111 and 112. The first heating plate 51 and the second heating plate 52 are heated by the heating medium being supplied from the inlet portion 114 to the space portion 113 and being discharged from the outlet portion 115.

As described above, in the sheet heating apparatus of the tenth embodiment, the space portion 113, which is the heating section and is defined by the first heating plate 51 and the second heating plate 52, the inlet portion 114 through which the heating medium is supplied to the space portion 113, and the outlet portion 115 that discharges the heating medium from the space portion 113 are provided.

Accordingly, it is not necessary to form a plurality of heating medium flow passages in the first heating plate 51 and the second heating plate 52, the configurations of the first heating plate 51, the second heating plate 52, and the heating section can be simplified, and manufacturing costs can be lowered.

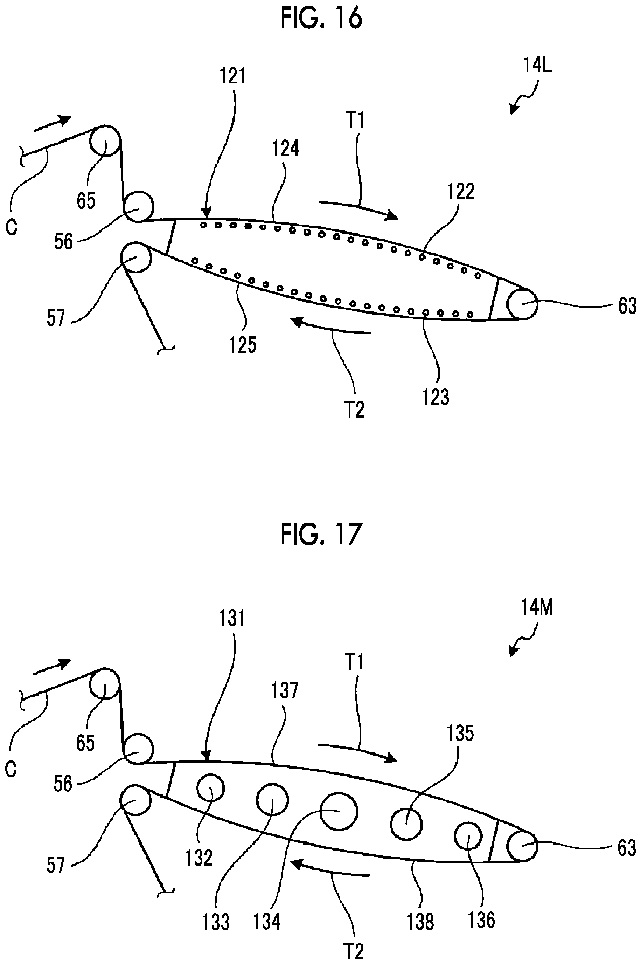

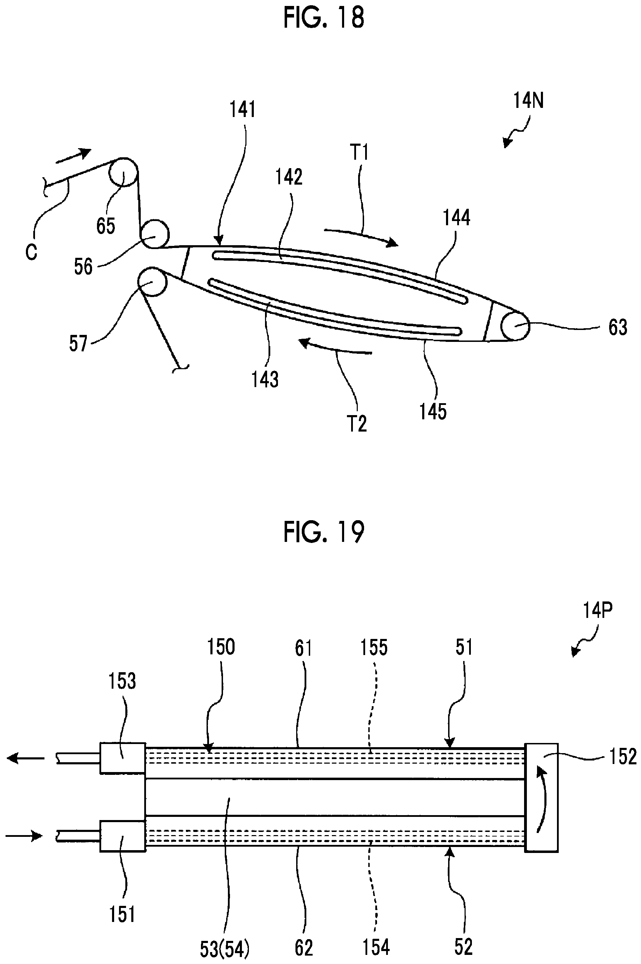

Fig. 16 is a schematic configuration view illustrating a sheet heating apparatus according to an example which does not form part of the present invention, and Fig. 17 and Fig. 18 are plan views illustrating a modification example of the sheet heating apparatus. Members having the same functions as the example described above will be assigned with the same reference signs and detailed description thereof will be omitted.

In the example as illustrated in Fig. 16, a preheater 14L includes a heating body 121, heating medium flow passages 122 and 123, which are heating sections, the first guide roller 56, the second guide roller 57, and the inverting roller 63.

The heating body 121 is a solid body. A first heating surface 124 and a second heating surface 125 are formed in the heating body. The plurality of heating medium flow passages 122 are formed along the first heating surface 124, and the plurality of heating medium flow passages 123 are formed along the second heating surface 125.

In a modification example of the example above, as illustrated in Fig. 17, a preheater 14M includes a heating body 131, heating medium flow passages 132, 133, 134, 135, and 136, which are heating sections, the first guide roller 56, the second guide roller 57, and the inverting roller 63.

The heating body 131 is a solid body. A first heating surface 137 and a second heating surface 138 are formed in the heating body, and the plurality of heating medium flow passages 132, 133, 134, 135, and 136 are formed between the first heating surface 137 and the second heating surface 138.

In a modification example of the example above, as illustrated in Fig. 18, a preheater 14N includes a heating body 141, heating medium flow passages 142 and 143, which are heating sections, the first guide roller 56, the second guide roller 57, and the inverting roller 63.

The heating body 141 is a solid body. A first heating surface 144 and a second heating surface 145 are formed in the heating body. One heating medium flow passage 142, which forms a slit along the first heating surface 144, is formed, and one heating medium flow passage 143, which forms a slit along the second heating surface 145, is formed.

As described above, in the sheet heating apparatus of the example above, the heating medium flow passages 122, 123, 132, 133, 134, 135, 136, 142, and 143 are directly provided in the solid heating bodies 121, 131, and 141. Accordingly, it is not necessary to form a plurality of heating medium flow passages in the first heating plate and the second heating plate, and manufacturing costs can be lowered by simplifying configurations.

### [Eleventh embodiment]

Fig. 19 is a schematic configuration view illustrating a sheet heating apparatus of an eleventh embodiment. Members having the same functions as the embodiment described above will be assigned with the same reference signs and detailed description thereof will be omitted.

In the eleventh embodiment, a preheater 14P includes the first heating plate 51, the second heating plate 52, the first joining member 53, the second joining member 54, a heating section 150, a first guide roller and a second guide roller which are not illustrated, and an inverting roller which is not illustrated, as illustrated in Fig. 19.

The first heating surface 61 is formed on the first heating plate 51, the second heating surface 62 is formed on the second heating plate 52, and respective end portions of the heating plates 51 and 52 are integrally joined by the first joining member 53 and the second joining member 54 such that the first heating surface 61 and the second heating surface 62 face outward.

The heating section 150 is configured with an inlet header 151, an intermediate header 152, an outlet header 153, a plurality of upstream side heating medium flow passages 154, and a plurality of downstream side heating medium flow passages 155. The inlet header 151 is fixed to one end portion of the second heating plate 52 in the width direction, and the outlet header 153 is fixed to one end portion of the first heating plate 51 in the width direction. The intermediate header 152 is fixed to the other end portion of the first heating plate 51 and the other end portion of the second heating plate 52 in the width direction. The inlet header 151 and the intermediate header 152 are connected together by the plurality of upstream side heating medium flow passages 154 inside the second heating plate 52, and the intermediate header 152 and the outlet header 153 are connected together by the plurality of downstream side heating medium flow passages 155 inside the first heating plate 51.

For this reason, the heating medium (steam) supplied to the inlet header 151 flows to the intermediate header 152 through the plurality of upstream side heating medium flow passages 154, flows from the intermediate header 152 to the outlet header 153 through the plurality of downstream side heating medium flow passages 155, and is discharged to the outside. The first heating plate 51 is heated by the heating medium flowing in the plurality of downstream side heating medium flow passages 155, and the second heating plate 52 is heated by the heating medium flowing in the plurality of upstream side heating medium flow passages 154. Then, heat is transferred from each of the heated heating surfaces 61 and 62 and the temperature of the top liner C that travels while staying in contact with each of the heating surfaces 61 and 62 rises.

At this time, the heating medium flowing in the plurality of upstream side heating medium flow passages 154 has a temperature higher than the heating medium flowing in the plurality of downstream side heating medium flow passages 155. For this reason, a temperature difference between the top liner C and the second heating surface 62 becomes larger, and the amount of heat transfer from the second heating surface 62 to the top liner C increases.

As described above, in the sheet heating apparatus of the twelfth embodiment, the plurality of upstream side heating medium flow passages 154 provided in the width direction of the second heating plate 52, the plurality of downstream side heating medium flow passages 155 provided in the width direction of the first heating plate 51, and the intermediate header 152 that connects the downstream end portions of the plurality of upstream side heating medium flow passages 154 and the upstream end portions of the plurality of downstream side heating medium flow passages 155 together are provided in the heating section 150.

Accordingly, when the top liner C travels from the first heating surface 61 to the second heating surface 62, a temperature difference between the top liner C and the second heating surface 62 is smaller than a temperature difference between the top liner C and the first heating surface 61. The heating medium flows from each of the upstream side heating medium flow passages 154 of the second heating plate 52, which is the downstream side, to each of the downstream side heating medium flow passages 155 of the first heating plate 51, which is the upstream side. For this reason, although the temperature of the heating medium passing through each of the heating medium flow passages 154 and 155 gradually decreases, a temperature difference between the top liner C and the second heating surface 62 is made larger and thus the top liner C can be efficiently heated since the heating medium flows in the second heating plate 52, which is the downstream side, first.

Although the first guide roller 56 and the second guide roller 57 are set as guide portions of the invention, the inverting roller 63 is set as an inverting guide, the first pressing roller 86 is set as a first pressing member, and the second pressing roller 87 is set as a second pressing member in the embodiment described above, the invention is not limited to the configuration. For example, a member having a guide surface with a small frictional resistance may be included instead of a roller.

Although steam is used as a heating medium for the heating sections 55 and 150 in the embodiment described above, a liquid such as oil may be used. In addition, the heating sections 55 and 150 are not limited to heating by a heating medium, and an electric heater may be applied thereto.

Although the respective heating surfaces 61 and 62 of the heating plates 51 and 52 are curved in a convex shape in the embodiment described above, it is not necessary for the heating surfaces to be curved over the entire area in the sheet transporting directions T1 and T2, and partially flat portions may be provided at intermediate portions, upstream portions, or downstream portions in the sheet transporting directions T1 and T2. In addition, the respective heating surfaces 61 and 62 of the heating plates 51 and 52 may be curved so as to be recessed by the amount of an end portion thereof in the width direction.

Although the sheet heating apparatus of the invention is described with the preheater 14 that heats the top liner C supplied to the single facer 15 being applied thereto in the embodiments described above, the preheater 12 that heats the medium B or the preheater 18 that heats the bottom liner A may be applied. The sheet heating apparatus of the invention may be applied to a pressure roll type single facer.

### Reference Signs List

10 corrugating machine (apparatus for manufacturing corrugated cardboard sheet)
11 mill roll stand
12 preheater
13 mill roll stand
14, 14A, 14B, 14C, 14D, 14E, 14F, 14G, 14H, 14K, 14L, 14M, 14N, 14P preheater (sheet heating apparatus)
15 single facer
16 bridge
17 mill roll stand
18 preheater
19 glue machine
20 double facer
21 rotary shear
22 slitter scorer
23 cutoff
24 defective sheet rejecting device
25 stacker
41 belt roll
42 tension roll
43 pressurizing belt
44 upper corrugating roll
45 lower corrugating roll
46 adhesive equipment
51 first heating plate
52 second heating plate
53 first joining member
54 second joining member
55, 150 heating section
56 first guide roller (guide portion)
57 second guide roller (guide portion)
61 first heating surface
62 second heating surface
63 invert roller (inverting guide)
71, 151 inlet header
72, 152 intermediate header
73, 153 outlet header
74, 154 upstream side heating medium flow passage
75, 155 downstream side heating medium flow passage
81 first guide roller drive unit
82 second guide roller drive unit
83 first guide roller rotational resistance adjusting unit
85 inverting roller rotational resistance adjusting unit
86 first pressing roller (first pressing member)
87 second pressing roller (second pressing member)
88 first pressing force adjusting unit
89 second pressing force adjusting unit
91 groove portion
100 control device
101, 102 reinforcing member (joining member)
106, 107 fin
111, 112 side plate
113 space portion
121, 131, 141 heating body
122, 123, 132, 133, 134, 135, 136, 142, 143 heating medium flow passage
A bottom liner (first liner)
B medium (core paper)
C top liner (second liner)
D single-faced cardboard sheet
E, F double-faced cardboard sheet
T1, T2 sheet transporting direction

## Claims

1. A sheet heating apparatus comprising:
a first heating plate (51) that has a first heating surface (61) curved in a convex shape;
a second heating plate (52) that has a second heating surface (62) curved in a convex shape;
a joining member (53, 54) that integrally joins the first heating plate and the second heating plate together such that the first heating surface and the second heating surface face outward;
a heating section that heats the first heating plate (51) and the second heating plate (52); and
a guide member (56, 57) that guides a sheet such that the sheet comes into contact with the first heating surface (61) and the second heating surface (62),
wherein the joining member (53, 54) is provided with a reinforcing member (101, 102) that joins intermediate portions of the first heating plate (51) and the second heating plate (52) in the sheet transporting direction together, and
a length of the reinforcing member in a width direction of each of the heating plates (51) and (52) is almost the same length as the width of each of the heating plates (51) and (52).

2. The sheet heating apparatus according to Claim 1, further comprising:
an inverting guide (63) that inverts a transporting direction of the sheet (T1) at end portions of the first heating plate (51) and the second heating plate (52), which are joined together by the joining member (53, 54), in a sheet transporting direction.

3. The sheet heating apparatus according to Claim 2,
wherein the joining member has a first joining member (53) that joins one end portion of the first heating plate (51) and one end portion of the second heating plate (52) in the sheet transporting direction together and a second joining member (54) that joins the other end portion of the first heating plate (51) and the other end portion of the second heating plate (52) in the sheet transporting direction together, and the second joining member (54) is provided with an inverting roller (63) which is rotatably provided as the inverting guide.

4. The sheet heating apparatus according to Claim 3, further comprising:
an inverting roller rotational resistance adjusting unit (85) that adjusts a rotational resistance of the inverting roller (63).

5. The sheet heating apparatus according to any one of Claims 1 to 4,
wherein the guide member (56, 57) has a first guide roller (56) disposed at the one end portion of the first heating plate (51) and a second guide roller (57) disposed at the one end portion of the second heating plate (52), and
the sheet heating apparatus further comprises
a first guide roller driving unit (81) that moves the first guide roller (56) close to or apart from the first heating surface (61); and
a second guide roller driving unit (82) that moves the second guide roller (57) close to or apart from the second heating surface (62).

6. The sheet heating apparatus according to Claim 5, further comprising:
a first guide roller rotational resistance adjusting unit (83) that adjusts a rotational resistance of the first guide roller (56).

7. The sheet heating apparatus according to any one of Claims 1 to 6,
wherein a curvature at an upstream end side of each of the first heating surface (61) and the second heating surface (62) is set to be higher than that at a downstream side in the sheet transporting direction (T1, T2).

8. The sheet heating apparatus according to Claim 1,
wherein the guide member (56, 57) includes a first guide roller (56) which is disposed at one end portion of the first heating plate (51) so as to be opposed to the first heating surface (61), and
a second guide roller (57) which is disposed at one end portion of the second heating plate (52) so as to be opposed to the second heating surface (62),
the apparatus further comprising:
a first guide roller driving unit (81) that moves the first guide roller (56) close to or apart from the first heating surface (61);
a second guide roller driving unit (82) that moves the second guide roller (57) close to or apart from the second heating surface (62);
a first guide roller rotational resistance adjusting unit (83) that adjusts a rotational resistance of the first guide roller (56);
an inverting roller (63) that inverts a transporting direction of the sheet (T1, T2) at end portions of the first heating plate (51) and the second heating plate (52), which are joined together by the joining member (53, 54), in a sheet transporting direction;
an inverting roller rotational resistance adjusting unit (85) that adjusts a rotational resistance of the inverting roller (63);
a first pressing member (86) that presses the sheet against the first heating surface (61) on the one end portion of the first heating plate (51);
a second pressing member (87) that presses the sheet against the second heating surface (62) on the other end portion of the second heating plate (52);
a first pressing force adjusting unit (88) that adjusts a pressing force exerted by the first pressing member (86);
a second pressing force adjusting unit (89) that adjusts a pressing force exerted by the second pressing member (87); and
a control device (100) that adjusts the first and second guide roller drive units (81, 82), the first guide roller rotational resistance adjusting unit (83), the inverting roller rotational resistance adjusting unit (85), and the first and second pressing force adjusting units (88, 89) in this order according to a heated state of the sheet caused by the first heating plate (51) and the second heating plate (52).

9. The sheet heating apparatus according to any one of Claims 1 to 8,
wherein a curvature of the first heating surface(61) disposed on an upstream side in the sheet transporting direction is set to be lower than a curvature of the second heating surface (62) disposed on the downstream side in the sheet transporting direction.

10. The sheet heating apparatus according to any one of Claims 1 to 9,
wherein fins (106, 107) are provided on back surfaces of the first heating plate (51) and the second heating plate (52).

11. The sheet heating apparatus according to any one of Claims 1 to 10,
wherein the heating section has a plurality of upstream side heating medium flow passages (74, 154) provided in the second heating plate (52), which is disposed on the downstream side in the sheet transporting direction (T1, T2), in a width direction intersecting the sheet transporting direction (T1, T2), a plurality of downstream side heating medium flow passages (75, 155) provided in the first heating plate (51), which is disposed on the upstream side in the sheet transporting direction (T1, T2), in the width direction intersecting the sheet transporting direction (T1, T2), and an intermediate heating medium flow passage (72, 152) that connects downstream end portions of the plurality of upstream side heating medium flow passages (74, 154) and upstream end portions of the plurality of downstream side heating medium flow passages (75, 155) together.

12. A single facer (15) comprising the sheet heating apparatus according to any one of Claims 1 to 11, which heats a second liner (C), and pasting the second liner heated by the sheet heating apparatus to corrugated core paper (B) to manufacture a single-faced cardboard sheet (D).

13. The single facer (15) according to Claim 12,
wherein the sheet heating apparatus is disposed above a mechanism that pastes the second liner (C) to the corrugated core paper (B).

14. An apparatus for manufacturing corrugated cardboard sheet (D) comprising:
the single facer (15) according to Claim 12 or 13 which pastes a second liner (C) to corrugated core paper (B) to manufacture a single-faced cardboard sheet (D); and
a double facer (20) which pastes a first liner (A) to the core paper (B) side of the single-faced cardboard sheet (D) to manufacture a double-faced cardboard sheet (E, F).

## Patentansprüche

1. Einrichtung zum Erhitzen einer Bahn, umfassend:
eine erste Heizplatte (51), die eine erste Heizfläche (61) aufweist, die in einer konvexen Form gekrümmt ist;
eine zweite Heizplatte (52), die eine zweite Heizfläche (62) aufweist, die in einer konvexen Form gekrümmt ist;
ein Verbindungselement (53, 54), das die erste Heizplatte und die zweite Heizplatte integral miteinander verbindet, sodass die erste Heizfläche und die zweite Heizfläche nach außen weisen;
eine Heizzone, die die erste Heizplatte (51) und die zweite Heizplatte (52) erhitzt; und
ein Führungselement (56, 57), das eine Bahn führt, sodass die Bahn mit der ersten Heizfläche (61) und der zweiten Heizfläche (62) in Kontakt kommt,
wobei das Verbindungselement (53, 54) mit einem Verstärkungselement (101, 102) versehen ist, das Zwischenabschnitte der ersten Heizplatte (51) und der zweiten Heizplatte (52) in der Bahntransportrichtung miteinander verbindet, und
eine Länge des Verstärkungselements in einer Breitenrichtung jeder der Heizplatten (51) und (52) nahezu die gleiche Länge wie die Breite jeder der Heizplatten (51) und (52) ist.

2. Einrichtung zum Erhitzen einer Bahn nach Anspruch 1, weiter umfassend:
eine Invertierführung (63), die eine Transportrichtung der Bahn (T1) an Endabschnitten der ersten Heizplatte (51) und der zweiten Heizplatte (52), die durch das Verbindungselement (53, 54) miteinander verbunden sind, in einer Bahntransportrichtung invertiert.

3. Einrichtung zum Erhitzen einer Bahn nach Anspruch 2,
wobei das Verbindungselement ein erstes Verbindungselement (53), das einen Endabschnitt der ersten Heizplatte (51) und einen Endabschnitt der zweiten Heizplatte (52) in der Bahntransportrichtung miteinander verbindet, und ein zweites Verbindungselement (54), das den anderen Endabschnitt der ersten Heizplatte (51) und den anderen Endabschnitt der zweiten Heizplatte (52) in der Bahntransportrichtung miteinander verbindet, aufweist, und das zweite Verbindungselement (54) mit einer Invertierwalze (63) versehen ist, die drehbar als die Invertierführung vorgesehen ist.

4. Einrichtung zum Erhitzen einer Bahn nach Anspruch 3, weiter umfassend:
eine Invertierwalzen-Drehwiderstandeinstelleinheit (85), die einen Drehwiderstand der Invertierwalze (63) einstellt.

5. Einrichtung zum Erhitzen einer Bahn nach einem der Ansprüche 1 bis 4,
wobei das Führungselement (56, 57) eine erste Führungswalze (56), die an dem einen Endabschnitt der ersten Heizplatte (51) angeordnet ist, und eine zweite Führungswalze (57), die an dem einen Endabschnitt der zweiten Heizplatte (52) angeordnet ist, aufweist, und
die Einrichtung zum Erhitzen einer Bahn weiter umfasst
eine erste Führungswalzenantriebseinheit (81), die die erste Führungswalze (56) nahe an die erste Heizfläche (61) heran oder von dieser weg bewegt; und
eine zweite Führungswalzenantriebseinheit (82), die die zweite Führungswalze (57) nahe an die zweite Heizfläche (62) heran oder von dieser weg bewegt.

6. Einrichtung zum Erhitzen einer Bahn nach Anspruch 5, weiter umfassend:
eine erste Führungswalzen-Drehwiderstandeinstelleinheit (83), die einen Drehwiderstand der ersten Führungswalze (56) einstellt.

7. Einrichtung zum Erhitzen einer Bahn nach einem der Ansprüche 1 bis 6,
wobei eine Krümmung an einer stromaufwärtigen Endseite sowohl der ersten Heizfläche (61) als auch der zweiten Heizfläche (62) höher als die an einer stromabwärtigen Seite in der Bahntransportrichtung (T1, T2) eingestellt ist.

8. Einrichtung zum Erhitzen einer Bahn nach Anspruch 1,
wobei das Führungselement (56, 57) eine erste Führungswalze (56), die an einem Endabschnitt der ersten Heizplatte (51) so angeordnet ist, dass sie der ersten Heizfläche (61) gegenüberliegt, und
eine zweite Führungswalze (57), die an einem Endabschnitt der zweiten Heizplatte (52) so angeordnet ist, dass sie der zweiten Heizfläche (62) gegenüberliegt, aufweist,
wobei die Einrichtung weiter umfasst:
eine erste Führungswalzenantriebseinheit (81), die die erste Führungswalze (56) nahe an die erste Heizfläche (61) heran oder von dieser weg bewegt;
eine zweite Führungswalzenantriebseinheit (82), die die zweite Führungswalze (57) nahe an die zweite Heizfläche (62) heran oder von dieser weg bewegt;
eine erste Führungswalzen-Drehwiderstandeinstelleinheit (83), die einen Drehwiderstand der ersten Führungswalze (56) einstellt;
eine Invertierwalze (63), die eine Transportrichtung der Bahn (T1, T2) an Endabschnitten der ersten Heizplatte (51) und der zweiten Heizplatte (52), die durch das Verbindungselement (53, 54) miteinander verbunden sind, in einer Bahntransportrichtung invertiert;
eine Invertierwalzen-Drehwiderstandeinstelleinheit (85), die einen Drehwiderstand der Invertierwalze (63) einstellt;
ein erstes Andruckelement (86), das die Bahn gegen die erste Heizfläche (61) an dem einen Endabschnitt der ersten Heizplatte (51) drückt;
ein zweites Andruckelement (87), das die Bahn gegen die zweite Heizfläche (62) an dem anderen Endabschnitt der zweiten Heizplatte (52) drückt;
eine erste Andruckkraft-Einstelleinheit (88), die eine von dem ersten Andruckelement (86) ausgeübte Andruckkraft einstellt;
eine zweite Andruckkraft-Einstelleinheit (89), die eine von dem zweiten Andruckelement (87) ausgeübte Andruckkraft einstellt; und
eine Steuervorrichtung (100), die die erste und zweite Führungswalzenantriebseinheit (81, 82), die erste Führungswalzen-Drehwiderstandeinstelleinheit (83), die Invertierwalzen-Drehwiderstandeinstelleinheit (85) und die erste und zweite Andruckkraft-Einstelleinheit (88, 89) in dieser Reihenfolge entsprechend einem durch die erste Heizplatte (51) und die zweite Heizplatte (52) bewirkten Erhitzungszustand der Bahn einstellt.

9. Einrichtung zum Erhitzen einer Bahn nach einem der Ansprüche 1 bis 8,
wobei eine Krümmung der ersten Heizfläche (61), die auf einer stromaufwärtigen Seite in der Bahntransportrichtung vorgesehen ist, geringer als eine Krümmung der zweiten Heizfläche (62), die auf der stromabwärtigen Seite in der Bahntransportrichtung vorgesehen ist, eingestellt ist.

10. Einrichtung zum Erhitzen einer Bahn nach einem der Ansprüche 1 bis 9,
wobei Rippen (106, 107) auf Rückflächen der ersten Heizplatte (51) und der zweiten Heizplatte (52) vorgesehen sind.

11. Einrichtung zum Erhitzen einer Bahn nach einem der Ansprüche 1 bis 10,
wobei die Heizzone eine Vielzahl von Heizmediumströmungskanälen (74, 154) auf der stromaufwärtigen Seite, die in der zweiten Heizplatte (52) vorgesehen sind, die auf der stromabwärtigen Seite in der Bahntransportrichtung (T1, T2) angeordnet ist, in einer Breitenrichtung, die die Bahntransportrichtung (T1, T2) schneidet, eine Vielzahl von Heizmediumströmungskanälen (75, 155) auf der stromabwärtigen Seite, die in der ersten Heizplatte (51) vorgesehen sind, die auf der stromaufwärtigen Seite in der Bahntransportrichtung (T1, T2) vorgesehen ist, in der Breitenrichtung, die die Bahntransportrichtung (T1, T2) schneidet, und einen intermediären Heizmediumströmungskanal (72, 152), der stromabwärtige Endabschnitte der Vielzahl von Heizmediumströmungskanälen (74, 154) auf der stromaufwärtigen Seite und stromaufwärtige Endabschnitte der Vielzahl von Heizmediumströmungskanälen (75, 155) auf der stromabwärtigen Seite miteinander verbindet, aufweist.

12. Maschinenanlage zur Herstellung einseitiger Wellpappe (15), umfassend die Einrichtung zum Erhitzen einer Bahn nach einem der Ansprüche 1 bis 11, die einen zweiten Liner (C) erhitzt und den zweiten Liner, der durch die Einrichtung zum Erhitzen einer Bahn erhitzt wird, auf Wellkernpapier (B) klebt, um eine einseitige Kartonbahn (D) herzustellen.

13. Maschinenanlage zur Herstellung einseitiger Wellpappe (15) nach Anspruch 12,
wobei die Einrichtung zum Erhitzen einer Bahn über einem Mechanismus angeordnet ist, der den zweiten Liner (C) auf das Wellkernpapier (B) klebt.

14. Einrichtung zur Herstellung einer Wellpappebahn (D), umfassend:
die Maschinenanlage zur Herstellung einseitiger Wellpappe (15) nach Anspruch 12 oder 13, die einen zweiten Liner (C) auf Wellkernpapier (B) klebt, um eine einseitige Kartonbahn (D) herzustellen; und
eine Maschinenanlage zur Herstellung doppelseitiger Wellpappe (20), die einen ersten Liner (A) auf die Wellkernpapierseite (B) der einseitigen Kartonbahn (D) klebt, um eine doppelseitige Kartonbahn (E, F) herzustellen.

## Revendications

1. Appareil de chauffage de feuilles comprenant :
une première plaque chauffante (51) ayant une première surface chauffante (61) incurvée en une forme convexe ;
une seconde plaque chauffante (52) ayant une seconde surface chauffante (62) incurvée en une forme convexe ;
un élément de jonction (53, 54) qui relie d'un seul tenant la première plaque chauffante et la seconde plaque chauffante ensemble de sorte que la première surface chauffante et la seconde surface chauffante soient tournées vers l'extérieur ;
une section chauffante qui chauffe la première plaque chauffante (51) et la seconde plaque chauffante (52) ; et
un élément de guidage (56, 57) qui guide une feuille de telle sorte que la feuille entre en contact avec la première surface chauffante (61) et la seconde surface chauffante (62),
dans lequel l'élément de jonction (53, 54) est pourvu d'un élément de renforcement (101, 102) qui relie ensemble des parties intermédiaires de la première plaque chauffante (51) et de la seconde plaque chauffante (52) dans le sens de transport de feuille, et
une longueur de l'élément de renforcement dans le sens de la largeur de chacune des plaques chauffantes (51) et (52) présente presque la même longueur que la largeur de chacune des plaques chauffantes (51) et (52).

2. Appareil de chauffage de feuilles selon la revendication 1, comprenant en outre :
un guide inverseur (63) qui inverse un sens de transport de la feuille (T1) au niveau de parties d'extrémité de la première plaque chauffante (51) et de la seconde plaque chauffante (52), qui sont reliées ensemble par l'élément de jonction (53, 54), dans un sens de transport de feuille.

3. Appareil de chauffage de feuilles selon la revendication 2,
dans lequel l'élément de jonction a un premier élément de jonction (53) qui relie ensemble une partie d'extrémité de la première plaque chauffante (51) et une partie d'extrémité de la seconde plaque chauffante (52) dans le sens de transport de feuille et un second élément de jonction (54) qui relie ensemble l'autre partie d'extrémité de la première plaque chauffante (51) et l'autre partie d'extrémité de la seconde plaque chauffante (52) dans le sens de transport de feuille, et le second élément de jonction (54) est pourvu d'un rouleau inverseur (63) qui est pourvu de manière rotative en tant que guide inverseur.

4. Appareil de chauffage de feuilles selon la revendication 3, comprenant en outre :
une unité d'ajustement de résistance à la rotation du rouleau inverseur (85) qui ajuste une résistance à la rotation du rouleau inverseur (63).

5. Appareil de chauffage de feuilles selon l'une quelconque des revendications 1 à 4,
dans lequel l'élément de guidage (56, 57) présente un premier rouleau de guidage (56) disposé au niveau de ladite une partie d'extrémité de la première plaque chauffante (51) et un second rouleau de guidage (57) disposé au niveau de ladite une partie d'extrémité de la seconde plaque chauffante (52), et
l'appareil de chauffage de feuilles comprend en outre
une première unité d'entraînement de rouleau de guidage (81) qui déplace le premier rouleau de guidage (56) à proximité de la première surface de chauffage (61) ou à l'écart de celle-ci ; et
une seconde unité d'entraînement de rouleau de guidage (82) qui déplace le second rouleau de guidage (57) à proximité de la seconde surface chauffante (62) ou à l'écart de celle-ci.

6. Appareil de chauffage de feuilles selon la revendication 5, comprenant en outre :
une première unité d'ajustement de résistance à la rotation du rouleau de guidage (83) qui ajuste une résistance à la rotation du premier rouleau de guidage (56).

7. Appareil de chauffage de feuilles selon l'une quelconque des revendications 1 à 6,
dans lequel une courbure au niveau d'un côté d'extrémité amont de chacune de la première surface chauffante (61) et de la seconde surface chauffante (62) est réglée pour être supérieure à celle du côté aval dans le sens de transport de feuille (T1, T2).

8. Appareil de chauffage de feuilles selon la revendication 1,
dans lequel l'élément de guidage (56, 57) inclut un premier rouleau de guidage (56) qui est disposé au niveau d'une partie d'extrémité de la première plaque chauffante (51) de manière à faire face à la première surface chauffante (61), et
un second rouleau de guidage (57) qui est disposé au niveau d'une partie d'extrémité de la seconde plaque chauffante (52) de manière à faire face à la seconde surface chauffante (62),
l'appareil comprenant en outre :
une première unité d'entraînement de rouleau de guidage (81) qui déplace le premier rouleau de guidage (56) à proximité de la première surface chauffante (61) ou à l'écart de celle-ci ;
une seconde unité d'entraînement de rouleau de guidage (82) qui déplace le second rouleau de guidage (57) à proximité de la seconde surface chauffante (62) ou à l'écart de celle-ci ;
une première unité d'ajustement de résistance à la rotation de rouleau de guidage (83) qui ajuste une résistance à la rotation du premier rouleau de guidage (56) ;
un rouleau inverseur (63) qui inverse un sens de transport de la feuille (T1, T2) au niveau de parties d'extrémité de la première plaque chauffante (51) et de la seconde plaque chauffante (52), qui sont reliées ensemble par l'élément de jonction (53, 54), dans un sens de transport de feuille ;
une unité d'ajustement de résistance à la rotation du rouleau inverseur (85) qui ajuste une résistance à la rotation du rouleau inverseur (63) ;
un premier élément de pression (86) qui presse la feuille contre la première surface chauffante (61) sur ladite une partie d'extrémité de la première plaque chauffante (51) ;
un second élément de pression (87) qui presse la feuille contre la seconde surface chauffante (62) sur l'autre partie d'extrémité de la seconde plaque chauffante (52) ;
une première unité d'ajustement de force de pression (88) qui ajuste une force de pression exercée par le premier élément de pression (86) ;
une seconde unité d'ajustement de force de pression (89) qui ajuste une force de pression exercée par le second élément de pression (87) ; et
un dispositif de commande (100) qui ajuste les première et seconde unités d'entraînement de rouleau de guidage (81, 82), la première unité d'ajustement de résistance à la rotation de rouleau de guidage (83), l'unité d'ajustement de résistance à la rotation de rouleau inverseur (85) et les première et seconde unités d'ajustement de force de pression (88, 89) dans cet ordre en fonction d'un état chauffé de la feuille causé par la première plaque chauffante (51) et la seconde plaque chauffante (52).

9. Appareil de chauffage de feuilles selon l'une quelconque des revendications 1 à 8,
dans lequel une courbure de la première surface chauffante (61) disposée d'un côté amont dans le sens de transport de feuille est réglée pour être inférieure à une courbure de la seconde surface chauffante (62) disposée du côté aval dans le sens de transport de feuille.

10. Appareil de chauffage de feuilles selon l'une quelconque des revendications 1 à 9,
dans lequel des ailettes (106, 107) sont pourvues sur les surfaces arrière de la première plaque chauffante (51) et de la seconde plaque chauffante (52).

11. Appareil de chauffage de feuilles selon l'une quelconque des revendications 1 à 10,
dans lequel la section de chauffage présente une pluralité de passages d'écoulement de milieu chauffant côté amont (74, 154) pourvus dans la seconde plaque chauffante (52), qui est disposée côté aval dans le sens de transport de feuille (T1, T2), dans le sens de la largeur coupant le sens de transport de feuille (T1, T2), une pluralité de passages d'écoulement de milieu chauffant côté aval (75, 155) pourvus dans la première plaque chauffante (51), qui est disposée côté amont dans le sens de transport de feuille (T1, T2), dans le sens de la largeur coupant le sens de transport de feuille (T1, T2) et un passage intermédiaire d'écoulement de milieu chauffant (72, 152) qui relie ensemble des parties d'extrémité aval de la pluralité de passages d'écoulement du milieu chauffant côté amont (74, 154) et des parties d'extrémité amont de la pluralité de passages d'écoulement de milieu chauffant côté aval (75, 155).

12. Dispositif onduleur simple face (15) comprenant l'appareil de chauffage de feuilles selon l'une quelconque des revendications 1 à 11, qui chauffe un second revêtement (C) et le collage du second revêtement chauffé par l'appareil de chauffage de feuilles sur du papier à âme ondulée (B) afin de fabriquer une feuille de carton simple face (D).

13. Dispositif onduleur simple face (15) selon la revendication 12,
dans lequel l'appareil de chauffage de feuilles est disposé au-dessus d'un mécanisme qui colle le second revêtement (C) au papier à âme ondulée (B).

14. Appareil pour fabriquer une feuille de carton ondulé (D) comprenant :
le dispositif onduleur simple face (15) selon la revendication 12 ou 13 qui colle un second revêtement (C) au papier à âme ondulée (B) afin de fabriquer une feuille de carton simple face (D) ; et
un dispositif onduleur double face (20) qui colle un premier revêtement (A) du côté papier à âme (B) de la feuille de carton simple face (D) afin de fabriquer une feuille de carton double face (E, F).
